# EUROPÄISCHE PATENTSCHRIFT

(11) **EP 3 341 104 B1**
(45) Veröffentlichungstag und Bekanntmachung des Hinweises auf die Patenterteilung: **18.12.2019**
(21) Anmeldenummer: 16767149.4
(22) Anmeldetag: 23.08.2016
(51) Int. Cl.: B01D 35/147, B01D 35/153, B01D 29/15

(54) **FLUIDFILTER MIT EINER VENTILEINHEIT**
FLUID FILTER WITH A VALVE UNIT
FILTRE À FLUIDE COMPRENANT UN ENSEMBLE SOUPAPE

(30) Priorität: 28.08.2015 DE 102015114353; 28.09.2015 DE 102015116344
(43) Veröffentlichungstag der Anmeldung: 04.07.2018
(73) Patentinhaber: Hengst SE, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2016/069901
(87) Internationale Veröffentlichungsnummer: WO 2017/036860

(56) Entgegenhaltungen:
- EP-A1- 0 972 554
- EP-A1- 1 177 826
- DE-A1-102009 048 588
- US-A- 3 132 097

## Beschreibung

Die vorliegende Erfindung betrifft einen Fluidfilter mit einem Gehäuse, mit einem in eine Rohseite des Fluidfilters mündenden Fluidzulauf und einem von einer Reinseite des Fluidfilters abgehenden Fluidablauf, mit einem auswechselbaren, die Rohseite und Reinseite voneinander trennenden, hohlzylindrischen Filtereinsatz und mit einer Ventileinheit, wobei die Ventileinheit eine konzentrisch im Gehäuse angeordnete, eine kreisringscheibenförmige Grundform aufweisende Ventilplatte mit Ventilöffnungen und eine auf der Ventilplatte angeordnete kreisringscheibenförmige flexible Ventilmembran aufweist, wobei der Filtereinsatz an seiner im Einbauzustand der Ventileinheit zugewandten Stirnseite einen axial vorragenden Andrückring in Form eines umlaufenden ringförmigen Kragens aufweist, wobei bei in das Gehäuse eingebautem Filtereinsatz dieser mit einer Stirnseite des Andrückrings die Ventilmembran axial an die Ventilplatte andrückt, wobei dabei die Ventilmembran mit ihrem von dem Andrückring an die Ventilplatte angedrückten Membranbereich eine die Rohseite und Reinseite des Fluidfilters voneinander trennende Dichtung bildet, wobei die Ventileinheit ein Rücklaufsperrventil ist und wobei bei in das Gehäuse eingebautem Filtereinsatz dieser mit dem Andrückring die Ventilmembran in einem radial inneren Membranbereich an die Ventilplatte andrückt.

Ein Fluidfilter der eingangs genannten Art mit den vorstehend angegebenen Merkmalen ist aus dem Dokument DE 10 2009 048 588 A1 bekannt. Als nachteilig wird bei diesem bekannten Fluidfilter angesehen, dass ein zuverlässiges Schließen der Ventilmembran des Rücklaufsperrventils nicht immer gewährleistet ist.

Für die vorliegende Erfindung stellt sich die Aufgabe, einen Fluidfilter der eingangs genannten Art zu schaffen, bei dem die Zuverlässigkeit der Funktion des Rücklaufsperrventils verbessert ist.

Die Lösung der Aufgabe gelingt erfindungsgemäß mit einem Fluidfilter der eingangs genannten Art, der dadurch gekennzeichnet ist, dass auf der von der Ventilplatte abgewandten Seite der Ventilmembran eine Federscheibe mit in Radialrichtung nach außen weisenden Federzungen angeordnet ist und dass bei in das Gehäuse eingebautem Filtereinsatz dieser mit dem Andrückring die Federscheibe in Richtung zur Ventilmembran vorspannt und/oder andrückt.

Bei dem erfindungsgemäßen Fluidfilter wird mittels der Federscheibe vorteilhaft eine wirksame Vergrößerung und Sicherstellung der Rückstellkraft der Ventilmembran des Rücklaufsperrventils erreicht, was wesentlich zu einer zuverlässigen Ventilfunktion beiträgt. Hierbei erhält der Andrückring noch eine weitere Funktion, womit ein vorteilhaft hoher Integrationsgrad erzielt wird. Mit der erfindungsgemäßen Ausgestaltung des Fluidfilters wird gewährleistet, dass das Fluid bei Stillstand des Fluidkreislaufs nicht in unerwünschter Weise aus dem Fluidfilter ablaufen kann. So wird sichergestellt, dass bei Inbetriebnahme des Fluidkreislaufs den nachgeschalteten Versorgungsstellen unverzüglich gefiltertes Fluid zugeführt wird.

Außerdem werden bei dem erfindungsgemäßen Fluidfilter vorteilhaft ein separates Bauteil zur Fixierung der Ventilmembran im Fluidfilter sowie eine separate Dichtung zwischen Rohseite und Reinseite des Fluidfilters nicht mehr benötigt, was Fertigungs- und Montagekosten einspart. Vorteilhaft übernimmt die Funktion des Fixierens der Ventilmembran nun der ohnehin in einem betriebsbereiten Fluidfilter vorhandene Filtereinsatz. Die Funktion der Dichtung zwischen Rohseite und Reinseite des Fluidfilters übernimmt die Ventilmembran mit. Wenn der Filtereinsatz zum Zweck eines Filtereinsatzwechsels aus dem Fluidfilter entfernt wird, sind zwar vorübergehend die Fixierung der Ventilmembran und die Abdichtung zwischen Rohseite und Reinseite aufgehoben, jedoch ist dies keinerlei Nachteil, weil während einer Filterwartung mit einem Filtereinsatzwechsel eine Ventilfunktion der Ventileinheit mit der Ventilmembran und auch eine Trennung von Rohseite und Reinseite nicht benötigt werden. Diese Funktionen sind vielmehr nur dann erforderlich, wenn ein Filtereinsatz im Fluidfilter angeordnet ist und der Fluidfilter im betrieblichen Einsatz steht.

Bevorzugt ist der Andrückring mit einer im Einbauzustand des Filtereinsatzes der Ventileinheit zugewandten Endscheibe des Filtereinsatzes verbunden oder einstückig ausgeführt, was zu einer einfachen und kostengünstigen Fertigung des Filtereinsatzes und zu einer einfachen Handhabung beiträgt.

Weiter ist für den Fluidfilter gemäß Erfindung vorgesehen, dass er einen zentralen Rohrstutzen aufweist und dass die Ventilplatte dichtend auf dem Außenumfang des Rohrstutzens sitzt. Bei geeigneter Materialauswahl und maßlicher Abstimmung kann die Ventilplatte ohne separate Dichtung dichtend mit dem Rohrstutzen zusammenwirken und auf diesem mechanisch gehalten werden, was weiter zu einer einfachen Fertigung und Verminderung der Zahl der nötigen Bauteile beiträgt.

In einer Ausgestaltung des Fluidfilters umfasst die Ventileinheit ein Filterumgehungsventil, wobei bei in das Gehäuse eingebautem Filtereinsatz dieser mit dem Andrückring die Ventilmembran in einem radial äußeren Membranbereich an die Ventilplatte andrückt. In der Praxis weisen sehr viele Fluidfilter ein Filterumgehungsventil auf, um auch bei zugesetztem Filtereinsatz noch eine ausreichende Versorgung von dem Fluidfilter nachgeordneten Verbrauchsstellen zu gewährleisten, auch wenn diese Versorgung dann mit ungefiltertem Fluid erfolgt. Bei dem erfindungsgemäßen Fluidfilter kann ein solches Filterumgehungsventil einfach und kostengünstig integriert werden.

Eine Weiterbildung des Fluidfilters sieht vor, dass der Andrückring mit seinem Innenumfang eine radiale Zentrierung und Führung für einen auf dem Rohrstutzen axial verschieblichen, in Ventilschließrichtung mit einer Kraft vorbelasteten Ventilkörper des Filterumgehungsventils bildet. Hier hat der Andrückring eine zusätzliche Funktion, was ein besonderes Führungsbauteil für den Ventilkörper überflüssig macht.

Damit der Ventilkörper bei möglichst einfacher Gestaltung seine Funktion zuverlässig erfüllen kann, ist dieser bevorzugt durch einen in seiner Grundform hohlzylindrischen Hülsenkörper oder durch einen im Querschnitt rechteckigen Ringkörper gebildet. Ein in seiner Grundform hohlzylindrischer Hülsenkörper bietet eine besonders gute axiale Führung. Ein im Querschnitt rechteckiger Ringkörper bietet eine besonders kompakte Bauform.

Um bei dem Fluidfilter das Andrücken der Ventilmembran einerseits und das Vorspannen und/oder Andrücken der Federscheibe andererseits im notwendigen Maße differenziert vornehmen zu können, schlägt die Erfindung vor, dass der Andrückring auf seiner Außenumfangsfläche wenigstens ein radial vorragendes, relativ zur Stirnseite des Andrückrings axial zurückliegendes, die Federscheibe in Richtung zur Ventilmembran vorspannendes und/oder andrückendes Anlageelement aufweist, wobei insbesondere ein Anlageelement in Form eines in Umfangsrichtung umlaufenden Steges vorgesehen ist oder mehrere in Umfangsrichtung voneinander beabstandete Anlageelemente in Form von Nocken oder von in Axial- oder Umfangsrichtung verlaufenden Rippen oder Stegen vorgesehen sind.

Um die Ventilmembran und die Federscheibe bei ausgebautem Filtereinsatz gegen ein Verlieren zu sichern, ist vorgesehen, dass die Federscheibe unter Zwischenlage der Ventilmembran punktuell mit der Ventilplatte verbunden ist.

In diesbezüglicher weiterer Ausgestaltung wird vorgeschlagen, dass von der Ventilplatte zwei oder mehr Haltestifte in Richtung zur Federscheibe abragen und dass die Federscheibe zwei oder mehr lagegerecht zu den Haltestiften angeordnete Haltelöcher aufweist, in welche die Haltestifte eingreifen. Die Federscheibe wird auf diese Weise relativ zur Ventilplatte zentriert und in Umfangsrichtung positioniert. Bei dem Zusammenbau des Fluidfilters kann so die Federscheibe einfach in Axialrichtung auf die Führungsstifte aufgesetzt werden, was die Montage einfach hält.

Um dabei einen ausreichenden Zusammenhalt zu gewährleisten, ist zweckmäßig die Federscheibe mit ihren Haltelöchern auf die Haltestifte aufgepresst oder aufgeklemmt. Wenn die Federscheibe einmal auf die Führungsstifte aufgepresst oder aufgeklemmt ist, kann sie sich nicht mehr selbsttätig von den Führungsstiften lösen.

Für eine zuverlässige Funktion des Rücklaufsperrventils ist es wichtig, dass die Federzungen der Federscheibe nicht durch äußere Einwirkungen verbogen oder sonst wie beschädigt werden. Deshalb ist erfindungsgemäß vorgesehen, dass die Federscheibe einen einstückig mit ihr ausgebildeten, die Federzungen radial außen umgebenden Schutzring aufweist und/oder dass an der Ventilplatte ein die Federzungen der Federscheibe radial außen umgebenden Schutzkragen angeordnet ist.

Wie vorstehend erläutert, kann die Ventileinheit des Fluidfilters ein Filterumgehungsventil und ein Rücklaufsperrventil umfassen. Hierfür sieht die Erfindung vor, dass die Ventilplatte und die flexible Ventilmembran jeweils sowohl ein Teil des Filterumgehungsventils als auch ein Teil des Rücklaufsperrventils sind und dass bei in das Gehäuse eingebautem Filtereinsatz dieser mit dem daran angeordneten Andrückring die Ventilmembran in einem radialen Membranzwischenbereich an die Ventilplatte andrückt. Diese Ausführung stellt eine besonders wirksame Maßnahme zur Einsparung von Bauteilen dar, weil die Ventilplatte und die flexible Ventilmembran jeweils sowohl ein Teil des Filterumgehungsventils als auch ein Teil des Rücklaufsperrventils sind. Bei in das Gehäuse eingebautem Filtereinsatz drückt dieser mit dem daran angeordneten Andrückring die Ventilmembran in einem radialen Zwischenbereich an die Ventilplatte an. Vorzugsweise sind dabei die radial inneren Bereiche von Ventilplatte und Ventilmembran dem Filterumgehungsventil und die radial äußeren Bereiche von Ventilplatte und Ventilmembran dem Rücklaufsperrventil zugeordnet. Durch das Andrücken der Ventilmembran in ihrem radialen Zwischenbereich zwischen Filterumgehungsventil und Rücklaufsperrventil verhalten sich der radial innere Bereich und der radial äußere Bereich der Ventilmembran wie zwei voneinander unabhängige Ventilmembranen. Zugleich bilden der Andrückring und die Ventilmembran in ihrem Zusammenwirken vorteilhaft die nötige Abdichtung und Trennung zwischen Rohseite und Reinseite des Fluidfilters, ohne dass dafür besondere Dichtmittel nötig sind.

Damit der Filtereinsatz unabhängig von Maßtoleranzen bei seiner Fertigung und von Maßveränderungen im Betrieb stets zuverlässig mit seinem Andrückring die Ventilmembran an die Ventilplatte andrückt sowie auch die Federscheibe vorspannt und/oder andrückt, ist bevorzugt vorgesehen, dass zwischen dem Gehäuse und dem Filtereinsatz ein axial federndes Bauteil angeordnet ist, das auf den Filtereinsatz in dessen Einbauzustand eine in Richtung zur Ventilplatte wirkende Kraft ausübt.

In einer bevorzugten diesbezüglichen Weiterbildung ist das axial federnde Bauteil ein gitterförmiger, im Inneren des Filtereinsatzes angeordneter Stützkörper, der im Einbauzustand des Filtereinsatzes mit seinem einen Ende am Gehäuse und mit seinem anderen Ende am Filtereinsatz abgestützt ist. Ein Stützkörper ist in der Regel in hohlzylindrischen Filtereinsätzen als Kollabierschutz ohnehin vorgesehen, sodass die Verwendung des Stützkörpers als federndes Bauteil einen zusätzlichen Nutzen ohne den Aufwand eines zusätzlichen Bauteils bietet.

Im Folgenden werden Ausführungsbeispiele der Erfindung anhand einer Zeichnung erläutert. Die Figuren der Zeichnung zeigen:
- Figur 1: einen kompletten Fluidfilter mit Filtereinsatz und Ventileinheit, in einem an einen Anschlussflansch angebauten Zustand, in einem Längsschnitt gemäß der Schnittlinie I-I in Figur 2,
- Figur 2: den Fluidfilter aus Figur 1 im Querschnitt gemäß der Schnittlinie II-II in Figur 1,
- Figur 3: einen Stützkörper des Filtereinsatzes aus Figur 1, in Seitenansicht,
- Figur 4: den Stützkörper aus Figur 3 in Draufsicht,
- Figur 5: eine erste Ventileinheit mit einem Filterumgehungsventil in Schließstellung, in einem vergrößerten Teil-Längsschnitt,
- Figur 6: die Ventileinheit aus Figur 5 mit dem Filterumgehungsventil in Öffnungsstellung, in einem vergrößerten Teil-Längsschnitt,
- Figur 7: eine zweite Ventileinheit mit einem Rücklaufsperrventil in Schließstellung, in einem vergrößerten Teil-Längsschnitt,
- Figur 8: die Ventileinheit aus Figur 7 mit dem Rücklaufsperrventil in Öffnungsstellung, in einem vergrößerten Teil-Längsschnitt,
- Figur 9: eine dritte Ventileinheit mit einem Filterumgehungsventil und einem Rücklaufsperrventil, beide in Schließstellung, in einem vergrößerten Teil-Längsschnitt,
- Figur 10: die Ventileinheit aus Figur 9 mit dem Filterumgehungsventil in Öffnungsstellung und dem Rücklaufsperrventil in Schließstellung, in einem vergrößerten Teil-Längsschnitt,
- Figur 11: die Ventileinheit aus Figur 9 mit dem Filterumgehungsventil in Schließstellung und dem Rücklaufsperrventil in Öffnungsstellung, in einem vergrößerten Teil-Längsschnitt,
- Figur 12: die Ventileinheit aus Figur 9 mit dem Filterumgehungsventil und dem Rücklaufsperrventil in Öffnungsstellung, in einem vergrößerten TeilLängsschnitt,
- Figur 13: eine vierte Ventileinheit mit einem gegenüber Figur 9 geänderten Ventilkörper des Filterumgehungsventils, mit dem Filterumgehungsventil und dem Rücklaufsperrventil in Schließstellung, in einem vergrößerten Teil-Längsschnitt,
- Figur 14: die Ventileinheit aus Figur 13 mit dem Filterumgehungsventil in Öffnungsstellung und dem Rücklaufsperrventil in Schließstellung, in einem vergrößerten Teil-Längsschnitt,
- Figur 15: eine erste ventilseitige Endscheibe des Filtereinsatzes, mit einem Andrückring und mit Anlageelementen in einer ersten Ausführung, in Ansicht schräg von oben,
- Figur 16: eine zweite ventilseitige Endscheibe des Filtereinsatzes, mit einem Andrückring und mit Anlageelementen in einer zweiten Ausführung, in Ansicht schräg von oben,
- Figur 17: eine dritte ventilseitige Endscheibe des Filtereinsatzes, mit einem Andrückring und mit Anlageelementen in einer dritten Ausführung, in Ansicht schräg von oben,
- Figur 18: eine vierte ventilseitige Endscheibe des Filtereinsatzes, mit einem Andrückring und mit Anlageelementen in einer vierten Ausführung, in Ansicht schräg von oben,
- Figur 19: eine fünfte ventilseitige Endscheibe des Filtereinsatzes, mit einem Andrückring und mit einem Anlageelement in einer fünften Ausführung, in Ansicht schräg von oben,
- Figur 20: eine fünfte Ventileinheit, bei der gegenüber Figur 9 die Ventilplatte und die Federscheibe der Ventileinheit geändert sind, mit dem Filterumgehungsventil und dem Rücklaufsperrventil in Schließstellung, in einem vergrößerten Teil-Längsschnitt,
- Figur 21: eine Ventilplatte der Ventileinheit, in einer Ansicht schräg von unten,
- Figur 22: die Ventilplatte aus Figur 21 mit daran angebrachter Federscheibe, in einer Ansicht schräg von unten,
- Figur 23: die Federscheibe aus Figur 22 in Draufsicht, und
- Figur 24: die Federscheibe aus Figur 23 in einer geänderten Ausführung, ebenfalls Draufsicht.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

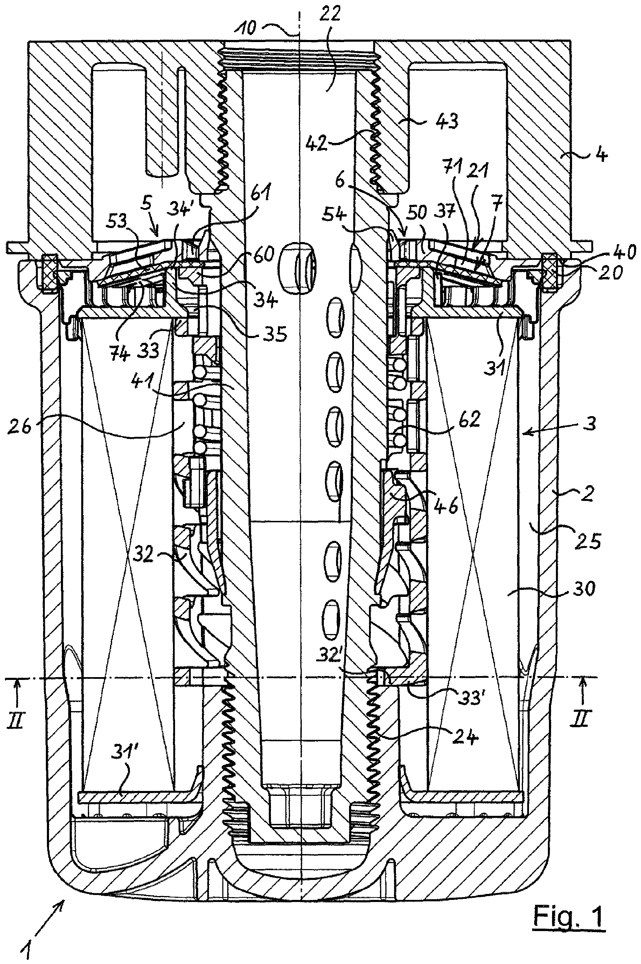

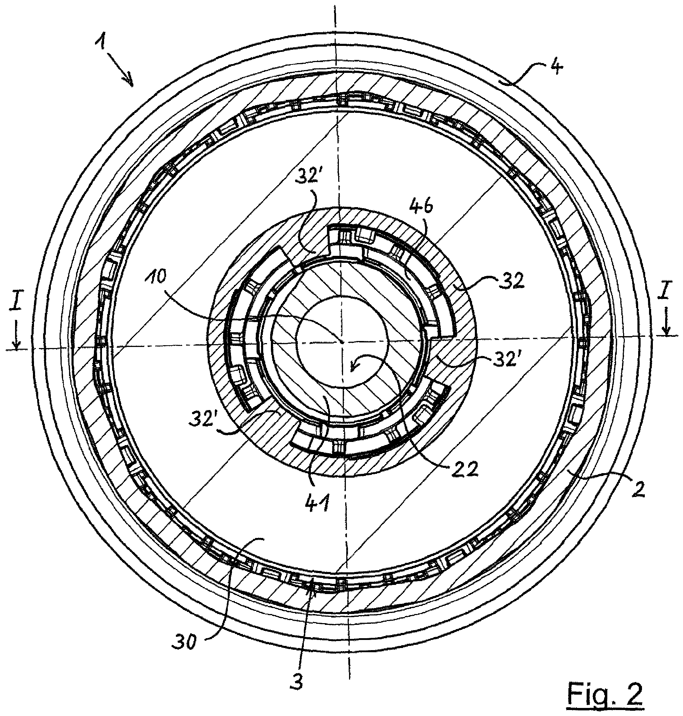

Figur 1 zeigt einen kompletten Fluidfilter 1 mit einem Filtereinsatz 3 und einer Ventileinheit 5, in einem an einen Anschlussflansch 4 angebauten Zustand, in einem Längsschnitt gemäß der Schnittlinie I-I in Figur 2. Der Fluidfilter 1 ist hier als sogenannter "hängender" Filter ausgeführt, weist also in seinem montierten Zustand von dem Anschlussflansch 4 ausgehend nach unten. Wenn im Folgenden Angaben wie "oben" und "unten" verwendet werden, beziehen sich diese aber lediglich auf das dargestellte Ausführungsbeispiel. Unabhängig davon ist der Fluidfilter 1 in jeder beliebigen räumlichen Lage und Ausrichtung funktionsfähig.

Der Anschlussflansch 4 weist hier einen zentralen Gewindestutzen 43 auf, in welchen mittels einer Verschraubung 42 ein zentraler Rohrstutzen 41 eingeschraubt ist. Mittels einer weiteren Verschraubung 24 ist ein Gehäuse 2 mit dem axial äußeren, gemäß Figur 1 unteren, Ende des Rohrstutzens 41 verschraubt. Mittels einer am flanschseitigen Stirnende angeordneten ringförmigen Dichtung 20 ist das Gehäuse 2 gegen eine Dichtfläche 40 des Anschlussflansches 4 abgedichtet. Zentral durch den Fluidfilter 1 verläuft dessen Längsmittelachse 10, zu der der Fluidfilter 1 im Wesentlichen rotationssymmetrisch aufgebaut ist.

In Inneren des Gehäuses 2 ist der Filtereinsatz 3 den zentralen Rohrstutzen 41 umgebend angeordnet. Der Filtereinsatz 3 besteht aus einem hohlzylindrischen Filterstoffkörper 30, zum Beispiel aus gefaltetem Filterpapier, und zwei den Filterstoffkörper 30 stirnseitig einfassenden Endscheiben 31, 31'. Beide Endscheiben 31, 31' sind mit je einer zentralen Öffnung ausgebildet. Die erste, anschlussflanschnahe Endscheibe 31 umgibt mit ihrer zentralen Öffnung 35 den Rohrstutzen 41 mit radialem Abstand. Die zweite, anschlussflanschferne Endscheibe 31' wirkt an ihrer zentralen Öffnung dichtend mit dem Gehäuse 2 zusammen.

Radial außen vom Filtereinsatz 3 liegt eine Rohseite 25 des Fluidfilters 1; radial innen vom Filtereinsatz 3 liegt eine Reinseite 26 des Fluidfilters 1. Durch einen radial außen liegenden Fluidzulauf 21 kann im Betrieb des Fluidfilters 1 ein zu filterndes Fluid, wie beispielsweise Schmieröl oder Kraftstoff einer Brennkraftmaschine, zur Rohseite 25 des Fluidfilters 1 geführt werden. Nach Durchströmen des Filterstoffkörpers 30 des Filtereinsatzes 3 in Radialrichtung von außen nach innen gelangt das nun gefilterte Fluid auf die Reinseite 26 des Fluidfilters 1. Von dort strömt das Fluid durch einen zentralen, durch das Innere des Rohrstutzens 41 verlaufenden Fluidablauf 22 ab, beispielsweise zu Schmierstellen oder zu einer Kraftstoffeinspritzanlage einer Brennkraftmaschine.

Im Inneren des Filtereinsatzes 3 ist ein in seiner Grundform hohlzylindrischer Stützkörper 32 angeordnet, welches im Betrieb des Fluidfilters 1 den Filterstoffkörper 30 bei Durchströmung in Radialrichtung von außen nach innen gegen ein Kollabieren abstützt. Weiterhin hat der Stützkörper 32 hier eine Funktion als axial federndes Bauteil, worauf weiter unten noch eingegangen wird.

In seinem dem Anschlussflansch 4 zugewandten, gemäß Figur 1 oberen, Bereich weist der Fluidfilter 1 eine Ventileinheit 5 auf. Die Ventileinheit 5 besitzt eine in ihrer Grundform kreisringscheibenförmigen Ventilplatte 50, die mittels einer an ihrem Innenumfang angeordneten Dichtlippe 54 dichtend auf den Außenumfang des zentralen Rohrstutzens 41 aufgesetzt ist.

Weiter umfasst die Ventileinheit 5 eine kreisringscheibenförmige elastisch-flexible Ventilmembran 53, die auf der vom Anschlussflansch 4 weg weisenden Seite der Ventilplatte 50 angeordnet ist. In ihrer Lage an der Ventilplatte 50 wird die Ventilmembran 53 durch einen Andrückring 34 gehalten, der hier ein einstückiges Teil der Endscheibe 31 des Filtereinsatzes 3 ist. Dabei drückt eine axial äußere Stirnseite 34' des Andrückrings 34 die Ventilmembran 53 entlang einer Kreislinie an die Ventilplatte 50 an. Gleichzeitig wird hierdurch die Rohseite 25 von der Reinseite 26 des Fluidfilters 1 getrennt.

Die Andrückkraft für den Andrückring 34 wird durch den ein federndes Bauteil bildenden Stützkörper 32 im Inneren des Filtereinsatzes 3 erzeugt. Hierzu ist der Stützkörper 32 mit seinem der Endscheibe 31 zugewandten Ende 33 an der Endscheibe 31 axial abgestützt. Das andere, von der Ventileinheit 5 abgewandte Ende 33' des federnden Stützkörpers 32 ist mittels Stütznasen 32' radial innen am Gehäuse 2 im Bereich der Verschraubung 24 axial abgestützt. In seinem entspannten Zustand ist der Stützkörper 32 länger als in seinem in Figur 1 gezeigten vorgespannten Zustand. Von dem Gehäuse 2 wird also in dessen mit dem zentralen Rohrstutzen 41 verschraubten Zustand eine axialen Kraft über den axial federnden, komprimierten Stützkörper 32 auf die Endscheibe 31 und den mit dieser einstückigen Andrückring 34 übertragen, um die Ventil-membran 53 mittels der Stirnseite 34' des Andrückrings 34 an die Ventilplatte 50 zuverlässig und dauerhaft anzudrücken.

Die Ventileinheit 5 umfasst bei dem in Figur 1 gezeigten Ausführungsbeispiel zwei Ventile, nämlich radial innen ein Filterumgehungsventil 6 und radial außen ein Rücklaufsperrventil 7.

Das Filterumgehungsventil 6 ist durch Ventilöffnungen 61 im radial inneren Bereich der Ventilplatte 50, durch einen radial inneren Teil der Ventilmembran 53, durch einen axial beweglich im Inneren des Andrückrings 34 geführten Ventilkörper 60 und eine den Ventilkörper 60 in Schließrichtung vorbelastende Ventilfeder 62 gebildet. An ihrem vom Ventilkörper 60 abgewandten Ende ist die Ventilfeder 62 an einer Federstütze 46 axial abgestützt, die auf den Außenumfang des zentralen Rohrstutzens 41 aufgesetzt und gegen Verschieben von der Ventileinheit 5 weg gesichert ist.

Das Rücklaufsperrventil 7 ist durch Ventilöffnungen 71 im radial äußeren Bereich der Ventilplatte 50, durch einen radial äußeren Teil der Ventilmembran 53 und durch eine Federscheibe 74 gebildet. Die Federscheibe 74 liegt mit einem radial inneren Bereich unter Anlageelementen 37, die in regelmäßigen Abständen auf dem Außenumfang des Andrückrings 34 angeordnet sind und gegenüber dessen Stirnseite 34' etwas zurückliegen. Mittels der Anlageelemente 37 wird die Federscheibe 74 in ihrem radial inneren Bereich vorgespannt und/oder an die Ventilmembran 53 angedrückt. Radial weiter außen besitzt die Federscheibe 74 flexible Federzungen 75, die gegen eine Eigen-Rückstellkraft zusammen mit dem radial äußeren Teil der Ventilmembran 53 in einer Richtung von der Ventilplatte 50 weg auslenkbar sind.

Figur 2 zeigt den Fluidfilter 1 aus Figur 1 im Querschnitt gemäß der Schnittlinie II-II in Figur 1. Radial außen ist ein kleiner Teil des Anschlussflansches 4 sichtbar. Radial innen davon ist das Gehäuse 2 geschnitten sichtbar. Radial innen davon liegt der Filtereinsatz 3 mit dem hier geschnittenen Filterstoffkörper 30. Im Inneren des Filterstoffkörpers 30 liegt der Stützkörper 32, welcher nahe seinem in Figur 2 dem Betrachter zugewandten Ende radial nach innen vorspringende Stütznasen 32' aufweist. Mit diesem Stütznasen 32' stützt sich, wie in Figur 1 sichtbar, der Stützkörper 32 an seinem Ende 33' im Bereich der Verschraubung 24 am Gehäuse 2 axial ab.

Im Zentrum der Figur 2 ist der zentrale Rohrstutzen 41 geschnitten, durch dessen Inneres der Fluidablauf 22 verläuft. Zwischen dem Außenumfang des Rohrstutzens 41 und dem Innenumfang des Stützkörpers 32 ist noch abschnittsweise die Federstütze 46 erkennbar.

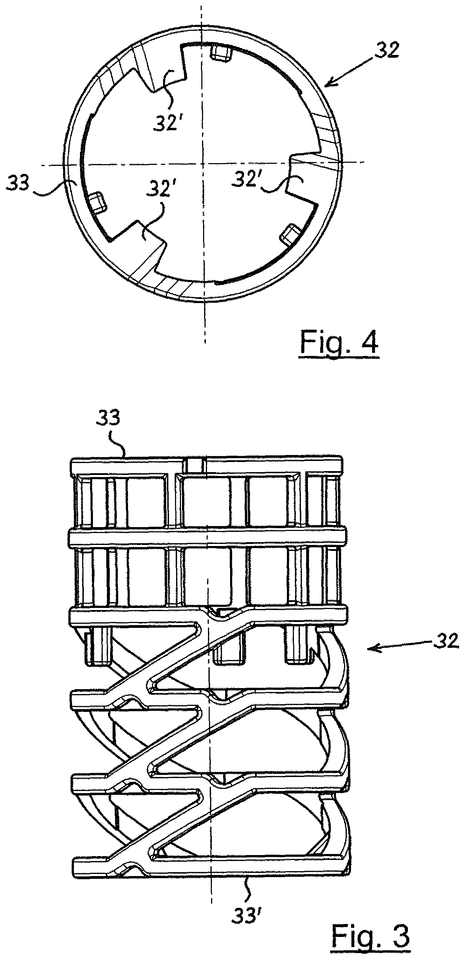

Figur 3 zeigt einen Stützkörper 32 des Filtereinsatzes 3 aus Figur 1 in Seitenansicht. Hier wird anschaulich sichtbar, dass der Stützkörper 32 zumindest über den unteren Teil seiner Höhe nach Art einer axial komprimierbaren Feder ausgeführt ist, um als federndes Bauteil, wie weiter oben schon erläutert, zu dienen. Gleichzeitig stützt der Stützkörper 32 in seinem im Inneren des Filterstoffkörpers 30 angeordneten Zustand diesen gegen ein Kollabieren im Betrieb ab. Aufgrund seiner Gitterstruktur stellt dabei der Stützkörper 32 keinen nennenswerten Strömungswiderstand für das den Filterstoffkörper 30 durchströmende Fluid dar.

Figur 4 zeigt den Stützkörper 32 aus Figur 3 in Draufsicht, wobei hier die am Ende 33 des Stützkörpers 32 radial nach innen weisend angeordneten Stütznasen 32' gut sichtbar sind.

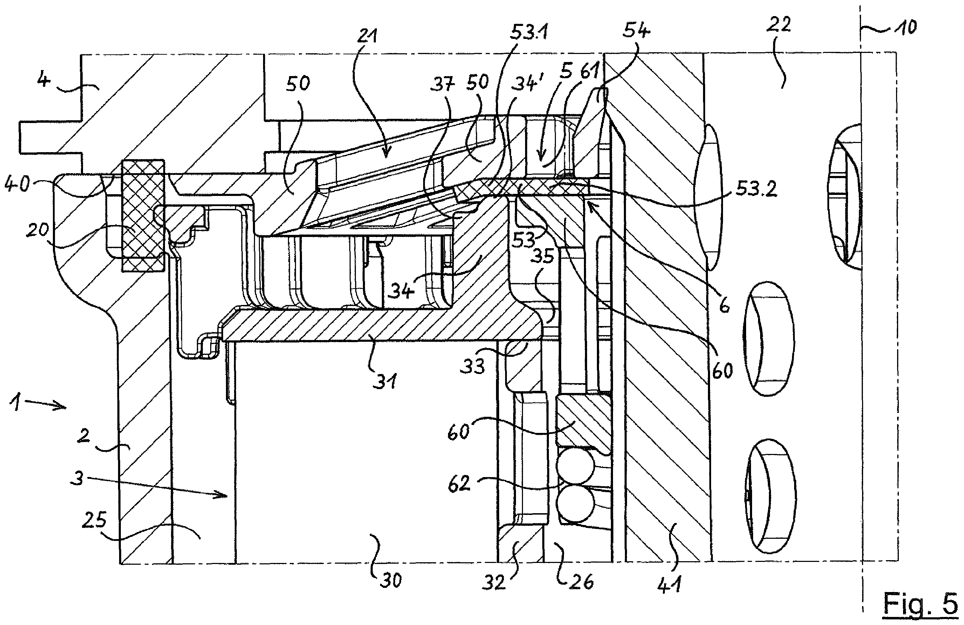

Figur 5 zeigt eine erste Ventileinheit 5 mit einem Filterumgehungsventil 6 in Schließstellung, in einem vergrößerten Teil-Längsschnitt. Ganz rechts in Figur 5 verläuft die Längsmittelachse 10 des Fluidfilters 1 durch den zentralen Rohrstutzen 41. Ganz links in Figur 5 ist ein Teil des Gehäuses 2 sichtbar. Im Inneren des Gehäuses 2 ist ein oberer Teil des Filtereinsatzes 3 mit seiner oberen Endscheibe 31 und dem daran einstückig angeformten Andrückring 34 zu sehen.

Oben in Figur 5 ist die erste Ventileinheit 5 vergrößert dargestellt, die hier nur das Filterumgehungsventil 6 umfasst. Den in Figur 5 oberen Teil der Ventileinheit 5 bildet die Ventilplatte 50, die mit ihrer radial inneren Dichtlippe 54 dichtend auf den Außenumfang des zentralen Rohrstutzens 41 aufgesetzt ist. Radial außen liegt ein flacher Randbereich der Ventilplatte 50 auf der Dichtfläche 40 des Anschlussflansches 4 auf, um die Ventilplatte 50 relativ zum Rohrstutzen 41 axial definiert zu positionieren.

An der in Figur 5 nach unten weisenden Seite der Ventilplatte 50 ist in deren radial innerem Bereich eine Ventilmembran 53 angeordnet. In ihrem radial äußeren Bereich 53.1 ist die Ventilmembran 53 mittels der Stirnseite 34' des Andrückrings 34 gegen die Ventilplatte 50 angedrückt und so fixiert. Ein radial innerer Bereich 53.2 der Ventilmembran 53 bildet einen Teil des Filterumgehungsventils 6 und wirkt mit einem Ventilkörper 60 zusammen, der axial verschieblich in Inneren des Andrückrings 34 und auf dem Außenumfang des Rohrstutzens 41 geführt ist. Mittels der den Rohrstutzen 41 umgebenden Ventilfeder 62 in Form einer Schraubendruckfeder wird der Ventilkörper 60 in Schließrichtung des Filterumgehungsventils 6 vorbelastet. In der Schließstellung, wie in Figur 5 gezeigt, drückt der Ventilkörper 60 den radial inneren Bereich 53.2 der Ventilmembran 53 gegen den radial inneren Teil der Ventilplatte 50 und verschließt so die Ventilöffnungen 61 des Filterumgehungsventils 6 in der Ventilplatte 50.

Das Zuführen von zu filterndem Fluid erfolgt radial außen durch den Fluidzulauf 21 auf die Rohseite 25 des Fluidfilters 1. Das Abströmen des gefilterten Fluids von der Reinseite 26 des Fluidfilters 1 erfolgt durch den Fluidablauf 22, der durch das Innere des Rohrstutzens 41 verläuft.

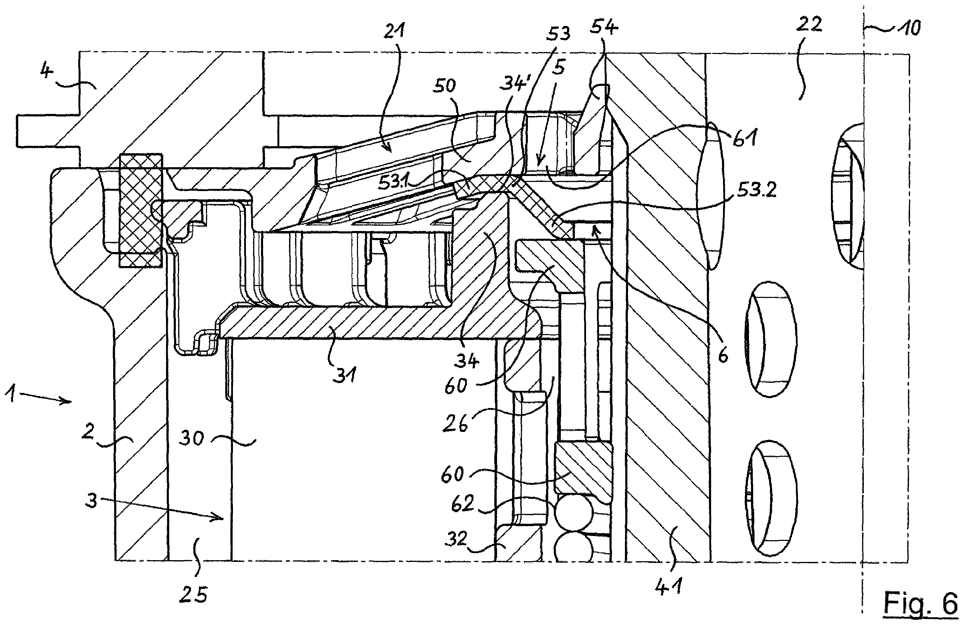

Wenn im Betrieb des Fluidfilters 1 ein erhöhter Strömungswiderstand für das Fluid auftritt, beispielsweise infolge eines Zusetzens des Filterstoffkörpers 30 mit Schmutzpartikeln und/oder durch Zähflüssigkeit des Fluids bei niedrigeren Temperaturen, ist der Fluiddruck auf der Rohseite 25 in der Lage, den radial inneren Bereich 53.2 der Ventilmembran 53 und den Ventilkörper 60 gegen die Kraft der Ventilfeder 62 von der Ventilplatte 50 abzuheben und so die Ventilöffnungen 61 freizugeben. In Figur 6 ist die Ventileinheit 5 aus Figur 5 mit dem Filterumgehungsventil 6 in dieser Öffnungsstellung in einem vergrößerten Teil-Längsschnitt gezeigt. In diesem Funktionszustand ist eine unmittelbare, den Filterstoffkörper 30 umgehende Strömungsverbindung für das Fluid von der Rohseite 25 zur Reinseite 26 freigegeben.

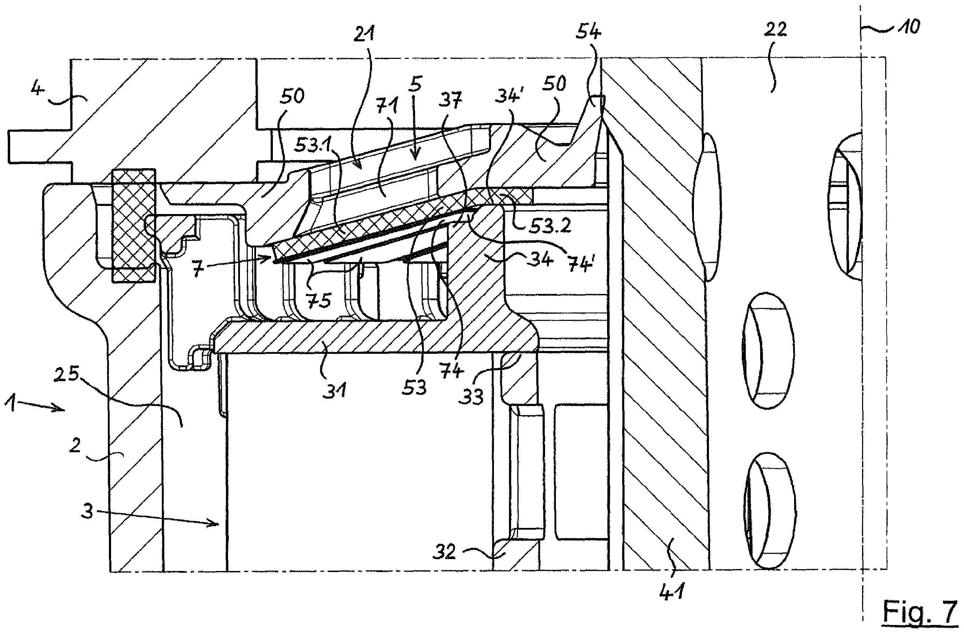

Figur 7 zeigt eine zweite Ventileinheit 5 mit einem Rücklaufsperrventil 7 in Schließstellung, in einem vergrößerten Teil-Längsschnitt. Auch hier weist die Ventileinheit 5 wieder die Ventilplatte 50 auf, die wieder mit ihrer radial inneren Dichtlippe 54 dichtend auf dem zentralen Rohrstutzen 41 sitzt und die hier nur mit Ventilöffnungen 71 für das Rücklaufsperrventil 7 versehen ist. An der Unterseite der Ventilplatte 50 ist wieder eine Ventilmembran 53 angeordnet, deren radial äußerer Bereich 53.1 einen Teil des Rücklaufsperrventils 7 bildet und deren radial innerer Bereich 53.2 hier mittels des Andrückrings 34 von dessen Stirnseite 34' an die Ventilplatte 50 angepresst ist.

An der von der Ventilplatte 50 abgewandten Seite der Ventilmembran 53 ist die Federscheibe 74 angeordnet, die an ihrem radial inneren Bereich 74' unter den Anlageelementen 37 am Außenumfang des Andrückrings 34 liegt und von diesem vorgespannt und/oder an die Ventilmembran 53 angedrückt wird. In ihrem radial äußeren Bereich hat die Federscheibe 74 die Federzungen 75. Wenn der Fluidfilter 1 außer Betrieb ist, sorgen die Federzungen 75 für eine dichtende Anlage der Ventilmembran 53 an der Ventilplatte 50, wodurch die Ventilöffnungen 71 verschlossen sind und ein Leerlaufen des Fluidfilters 1 verhindert ist.

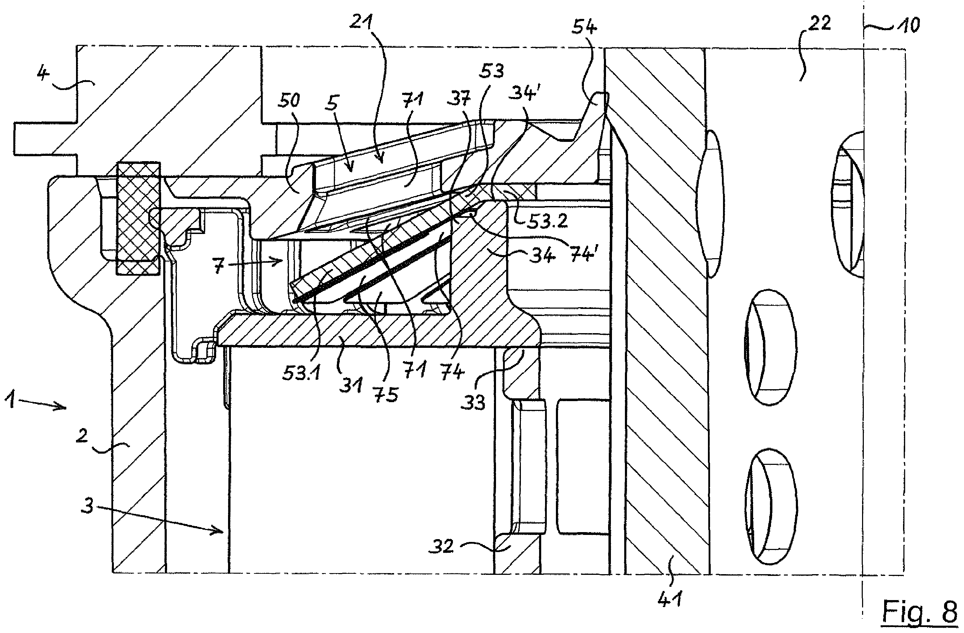

Figur 8 zeigt die Ventileinheit 5 aus Figur 7 mit dem Rücklaufsperrventil 7 in Öffnungsstellung, in einem vergrößerten Teil-Längsschnitt. Diese Stellung nimmt das Rücklaufsperrventil 7 im laufenden Betrieb des Fluidfilters 1 ein, wobei dann über den Fluidzulauf 21 zugeführtes, zu filterndes Fluid durch die offenen Ventilöffnungen 71 in der Ventilplatte 50 zur Rohseite 25 des Fluidfilters 1 gelangt. In diesem Betriebszustand lenkt das unter Druck zugeführte Fluid den radial äußeren Bereich 53.1 der Ventilmembran 53 und die Federzungen 75 gegen die Eigen-Rückstellkraft der Federzungen 75 der Federscheibe 74 in einer Richtung von der Ventilplatte 50 weg aus.

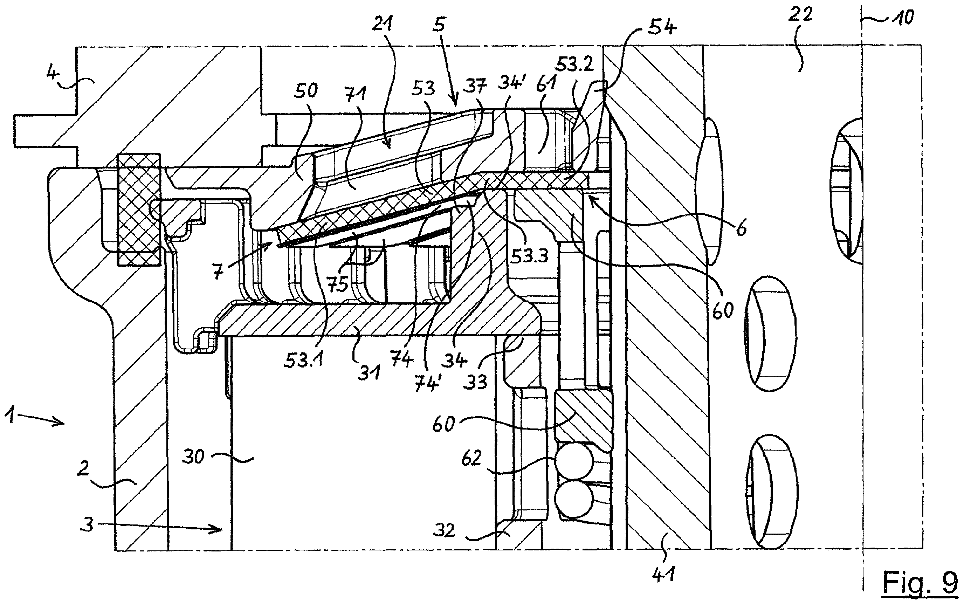

Figur 9 zeigt eine dritte Ventileinheit 5 mit einem Filterumgehungsventil 6 und einem Rücklaufsperrventil 7, wie bei dem Ausführungsbeispiel des Fluidfilters 1 in Figur 1 gezeigt, mit beiden Ventilen 6, 7 in Schließstellung, in einem vergrößerten Teil-Längsschnitt.

Die Ventilplatte 50 ist hier wieder mittels ihrer Dichtlippe 54 dichtend auf den Außenumfang des zentralen Rohrstutzens 41 aufgesetzt und besitzt in ihrem radial inneren Bereich Ventilöffnungen 61 für das Filterumgehungsventil 6 und in ihrem radial äußeren Bereich Ventilöffnungen 71 für das Rücklaufsperrventil 7. Die Ventilmembran 53 ist hier beiden Ventilen 6, 7 zugeordnet. Ein radial äußerer Bereich 53.1 der Ventilmembran 53 bildet einen Teil des Rücklaufsperrventils 7. Ein hier radial innerer Bereich 53.2 der Ventilmembran 53 ist ein Teil des Filterumgehungsventils 6. In einem radialen Zwischenbereich 53.3 zwischen den Membranbereichen 53.1 und 53.2 ist die Ventilmembran 53 mittels des Andrückrings 34 an der Endscheibe 31 an die Ventilplatte 50 angedrückt und so fixiert.

Die beiden Ventile 6, 7 entsprechen den zuvor schon beschriebenen Ausführungen von Filterumgehungsventil 6 und Rücklaufsperrventil 7, auf deren Beschreibung verwiesen wird. In Figur 9 ist sowohl das Filterumgehungsventil 6 als auch das Rücklaufsperrventil 7 in Schließstellung dargestellt.

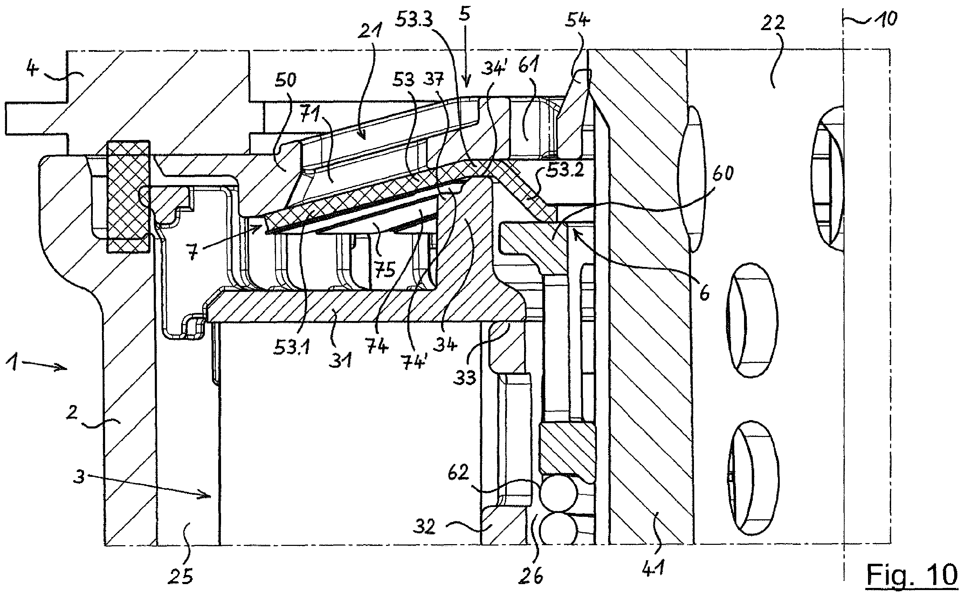

Figur 10 zeigt die Ventileinheit 5 aus Figur 9 mit dem Filterumgehungsventil 6 in Öffnungsstellung und dem Rücklaufsperrventil 7 in Schließstellung, in einem vergrößerten Teil-Längsschnitt. Aufgrund eines einen vorgebbaren Grenzwert überschreitenden Differenzdrucks zwischen der Rohseite 25 und der Reinseite 26, z.B. wegen eines zugesetzten Filtereinsatzes 3, strömt kein Fluid durch den Filtereinsatz 3; vielmehr strömt nun der Fluidstrom durch das geöffnete Filterumgehungsventil 6, welches durch den Fluiddruck gegen die Kraft der Ventilfeder 62 geöffnet ist. Es ist nun ein unmittelbarer Strömungsweg für das Fluid vom Fluidzulauf 21 und der Rohseite 25 durch die offenen Ventilöffnungen 61 zur Reinseite 26 und zum Fluidablauf 22 frei.

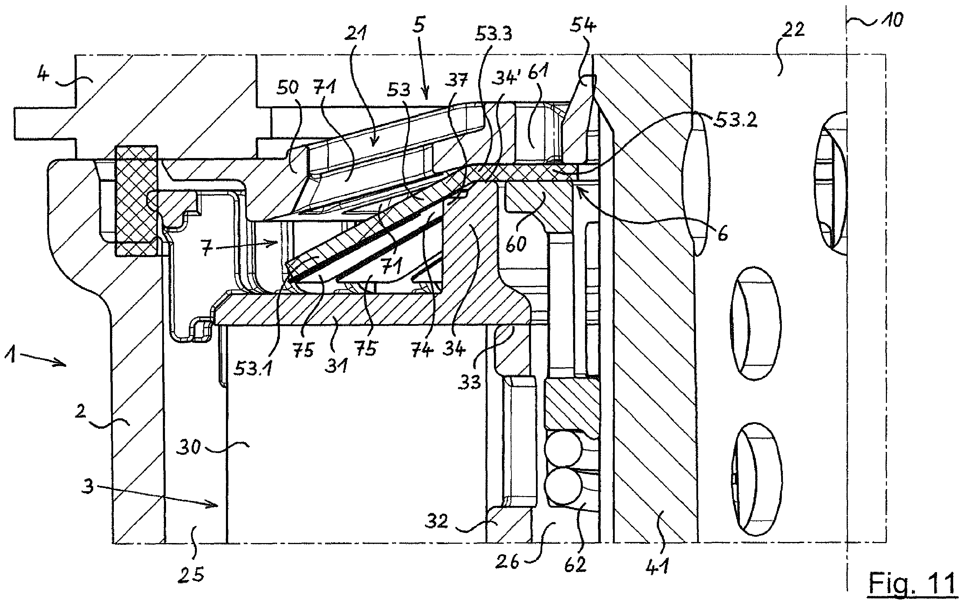

Figur 11 zeigt die Ventileinheit 5 aus Figur 9 mit dem Filterumgehungsventil 6 in Schließstellung und dem Rücklaufsperrventil 7 in Öffnungsstellung, in einem vergrößerten Teil-Längsschnitt. Dieser Zustand der Ventileinheit 5 tritt im normalen Betrieb des Fluidfilters 1 auf, wenn unter Druck stehendes zu filterndes Fluid durch den Fluidzulauf 21 zur Rohseite 25 gefördert wird und dann von dort durch den Filterstoffkörper 30 zur Reinseite 26 gelangt.

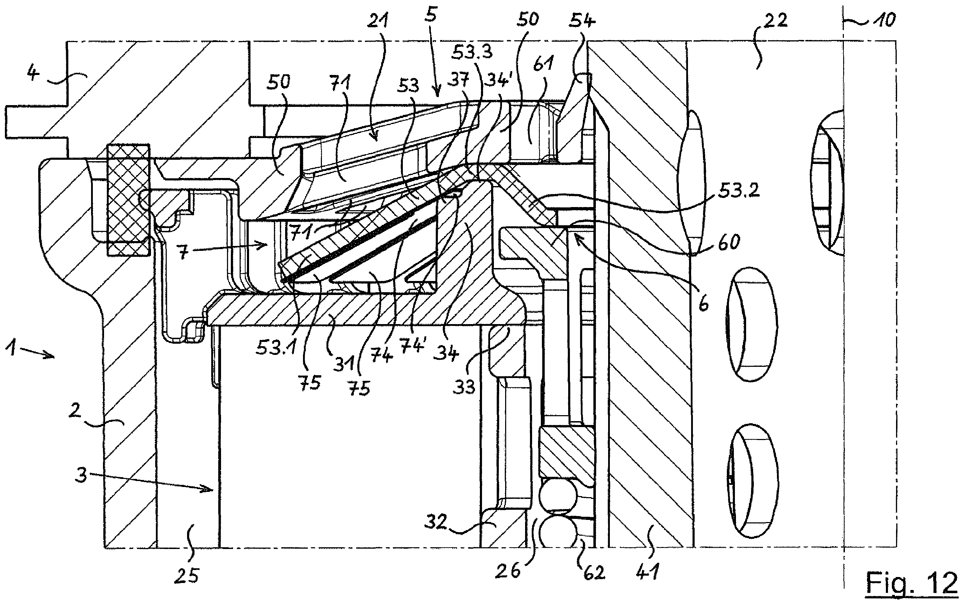

Figur 12 zeigt die Ventileinheit 5 aus Figur 9 mit dem Filterumgehungsventil 6 und dem Rücklaufsperrventil 7 in Öffnungsstellung, in einem vergrößerten Teil-Längsschnitt. Ein Betriebszustand des Fluidfilters 1 gemäß Figur 12 kann auftreten, wenn der Filtereinsatz 3 einen erhöhten Strömungswiderstand aufweist, aber noch teilweise für das Fluid durchlässig ist. In diesem Fall ergibt sich ein zweigeteilter Fluidstrom, wobei ein erster Teilstrom vom Fluidzulauf 21 durch das offene Rücklaufsperrventil 7 zur Rohseite 25 und durch den Filterstoffkörper 30 zur Reinseite 26 strömt und ein zweiter Teilstrom vom Fluidzulauf 21 durch das gegen die Kraft der Ventilfeder 62 geöffnete Filterumgehungsventil 6 unmittelbar zur Reinseite 26 fließt.

Dabei wird die Ventilmembran 53 in ihrem radialen Zwischenbereich 53.3 von der Stirnseite 34' des Andrückrings 34 an die Ventilplatte 50 angepresst. Der radial äußere Bereich 53.1 der Ventilmembran 53 und der radial innere Bereich 53.2 der Ventilmembran 53 können sich dabei unabhängig voneinander bewegen und beeinflussen sich nicht gegenseitig, obwohl sie Teil derselben Ventilmembran 53 sind. Somit ist eine voneinander unabhängige Funktion von Filterumgehungsventil 6 und Rücklaufsperrventil 7 gewährleistet.

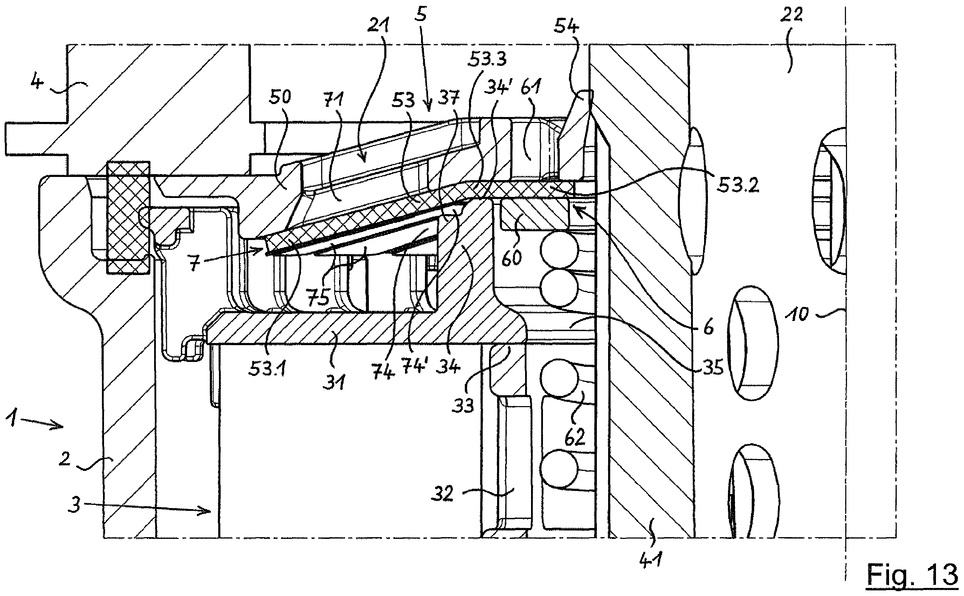

Figur 13 zeigt eine vierte Ventileinheit 5 mit einem gegenüber Figur 9 geänderten Ventilkörper 60 des Filterumgehungsventils 6, mit dem Filterumgehungsventil 6 und dem Rücklaufsperrventil 7 in Schließstellung, in einem vergrößerten Teil-Längsschnitt. Der Ventilkörper 60 ist hier nicht, wie in den zuvor schwebenden Ausführungsbeispielen, als in seiner Grundform hülsenförmiger Körper ausgeführt, sondern als ein einfacher, im Querschnitt rechteckiger, flacher Ring. Mit seiner in Figur 13 oberen Flachseite wirkt der ringförmige Ventilkörper 60 mit dem radial inneren Bereich 53.2 der Ventilmembran 53 zusammen. An der in Figur 13 nach unten weisenden Flachseite des Ventilkörpers 60 liegt das obere Ende der Ventilfeder 62 an. Geführt wird der Ventilkörper 60 hier im Wesentlichen mit seinem radial äußeren Umfang am Innenumfang des Andrückrings 34, so dass ein störendes Verkanten oder Verklemmen des Ventilkörpers 60 trotz dessen geringer axialer Bauhöhe vermieden wird.

In den weiteren Einzelteilen und Funktionen entspricht der Fluidfilter 1 in Figur 13 dem Beispiel nach den Figuren 9 bis 12, auf deren Beschreibung verwiesen wird.

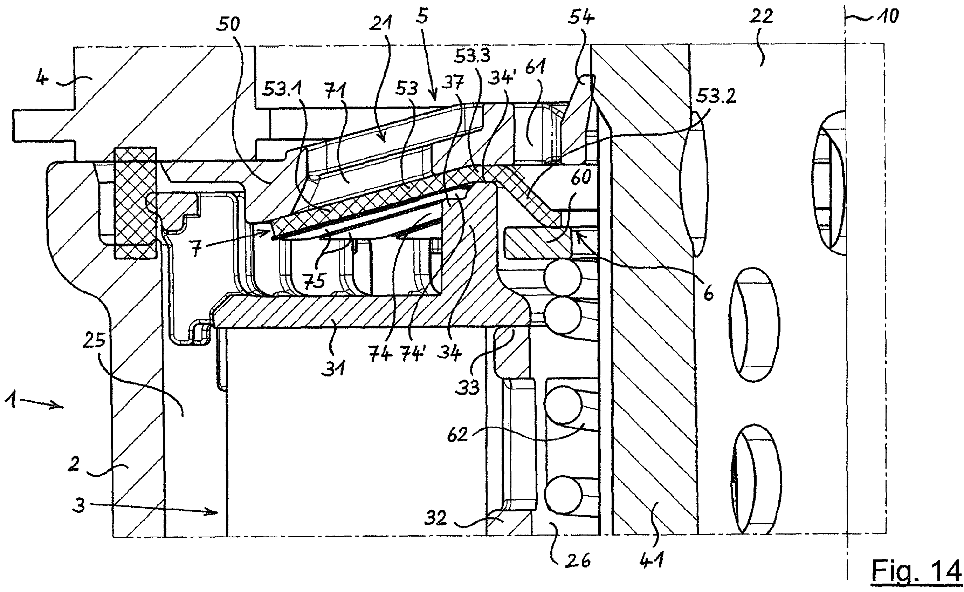

Figur 14 zeigt die Ventileinheit 5 aus Figur 13 mit dem Filterumgehungsventil 6 in Öffnungsstellung und dem Rücklaufsperrventil 7 in Schließstellung, in einem vergrößerten Teil-Längsschnitt. Aufgrund ein Druckdifferenz zwischen Rohseite 25 und Reinseite 26, die einen vorgebbaren Grenzwert überschreitet, ist der im Fluidzulauf 21 und auf der Rohseite 25 herrschende Fluiddruck in der Lage, den Ventilkörper 60 gegen die Kraft der Ventilfeder 62 zusammen mit dem radial inneren Bereich 53.2 der Ventilmembran 53 von der Ventilplatte 50 weg zu bewegen und so die Ventilöffnungen 61 freizugeben. Über die Ventilöffnungen 61 ist nun eine unmittelbare Strömungsverbindung vom Fluidzulauf 21 zur Reinseite 26 und zum Fluidablauf 22 freigegeben. Bei seiner Verschiebung in Öffnungsrichtung, das heißt gemäß Figur 14 nach unten, wird der Ventilkörper 60 mit seinem Außenumfang am Innenumfang des Andrückrings 34 an der Endscheibe 31 axial geführt.

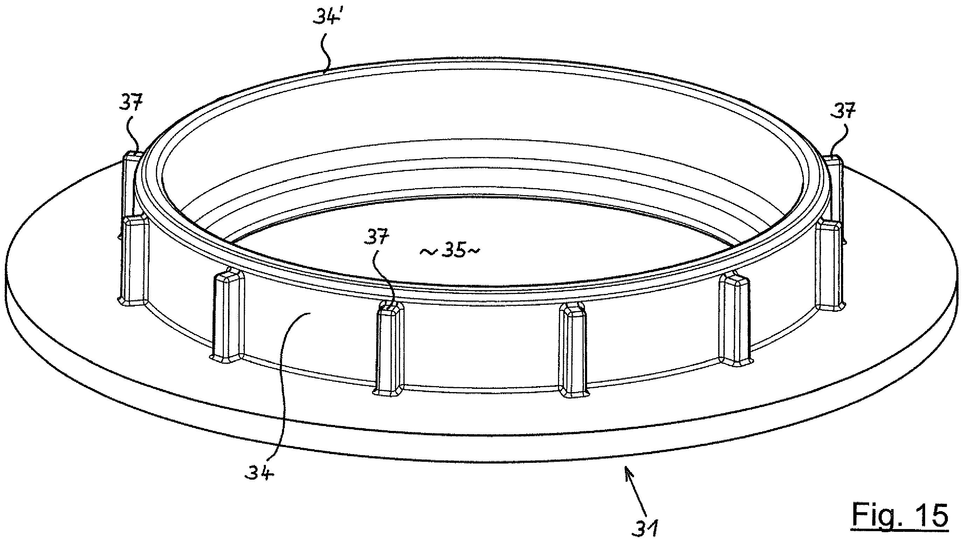

Figur 15 zeigt als Einzelteil des Filtereinsatzes des Fluidfilters eine erste ventilseitige Endscheibe 31 des Filtereinsatzes, mit einem Andrückring 34 und mit Anlageelementen 37 in einer ersten Ausführung, in Ansicht schräg von oben. Mit der in Figur 15 nach unten weisenden Flachseite der Endscheibe 31 ist der hier nicht dargestellte Filterstoffkörper verbindbar, beispielsweise durch Verschweißen oder Verkleben. Im Zentrum der Endscheibe 31 liegt deren zentrale Öffnung 35. An der nach oben weisenden Seite der Endscheibe 31 ist der Andrückring 34 einstückig angeformt. Die freie, nach oben weisende Stirnseite 34' des Andrückrings 34 dient zum Andrücken der Ventilmembran an die Ventilplatte im zusammengebautem Zustand, wie weiter oben erläutert.

Auf dem Außenumfang des Andrückrings 34 sind in regelmäßigen Abständen mehrere axial verlaufende Rippen oder Stege als Anlageelemente 37 für das Vorspannen und/oder Andrücken der Federscheibe an die Ventilmembran und an die Ventilplatte des Fluidfilters angeformt. Unten gehen die Anlageelemente 37 von der Oberseite des flachen Teils der Endscheibe 31 aus. Die obere Stirnfläche der Anlageelemente 37 liegt jeweils gegenüber der Stirnseite 34' des Andrückrings 34 um ein gewisses Maß zurück, um die kreisringscheibenförmige Federscheibe auf dem Andrückring 34 zentrieren zu können.

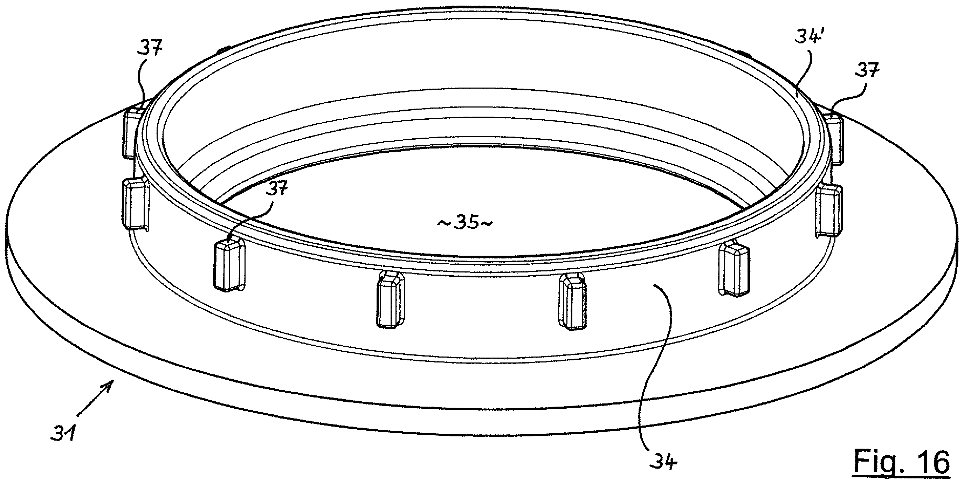

Figur 16 zeigt eine zweite ventilseitige Endscheibe 31 des Filtereinsatzes, mit einem Andrückring 34 und mit Anlageelementen 37 in einer zweiten Ausführung, in Ansicht schräg von oben. Im Unterschied zu dem Beispiel nach Figur 15 sind bei dem Beispiel nach Figur 16 die Anlageelemente 37 in ihrer axialen Länge kürzer ausgebildet und weisen unten einen Abstand von der Oberseite des flachen Teils der Endscheibe 31 auf. Ansonsten entspricht die Endscheibe 31 nach Figur 16 dem Beispiel gemäß Figur 15.

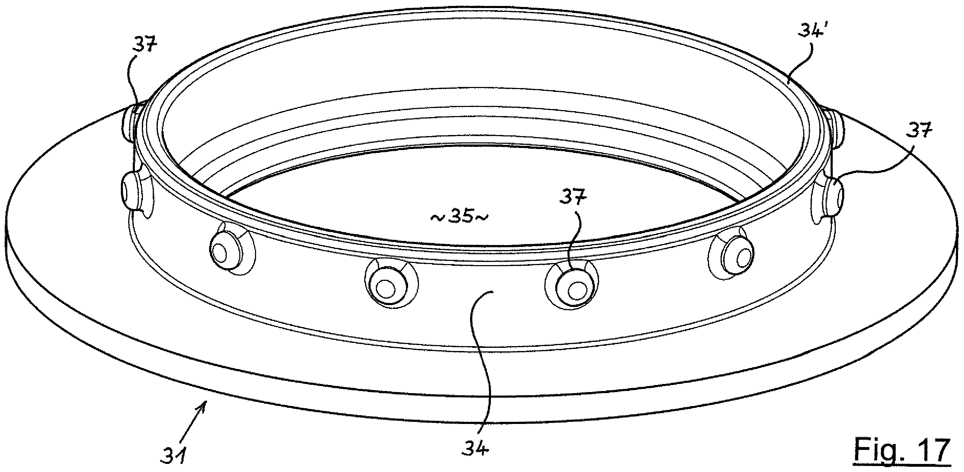

Figur 17 zeigt eine dritte ventilseitige Endscheibe 31 des Filtereinsatzes, mit einem Andrückring 34 und mit Anlageelementen 37 in einer dritten Ausführung, in Ansicht schräg von oben. Unterschiedlich zu den beiden zuvor beschriebenen Beispielen nach den Figuren 15 und 16 sind bei dem Beispiel nach Figur 17 die Anlageelemente 37 in Form von runden Noppen ausgeführt. Auch mit den so ausgeführten Anlageelementen 37 kann die Federscheibe der Ventileinheit vorgespannt und/oder angedrückt und gleichzeitig zentriert werden.

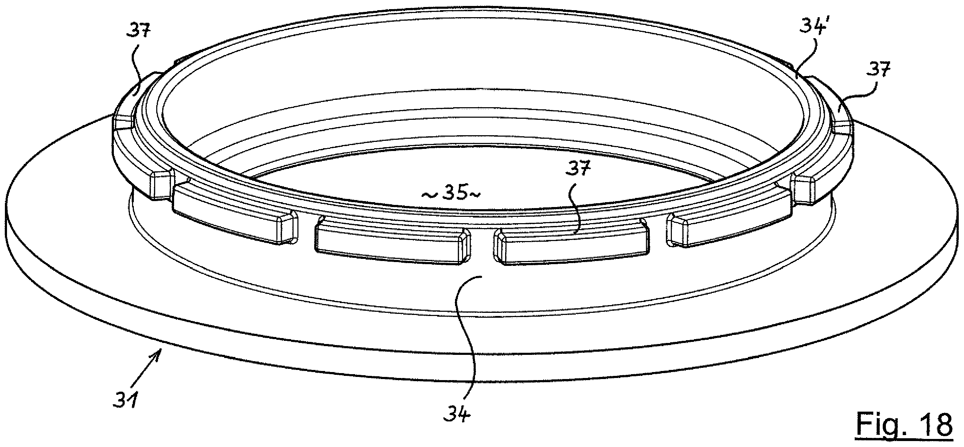

Figur 18 zeigt eine vierte ventilseitige Endscheibe 31 des Filtereinsatzes, mit einem Andrückring 34 und mit Anlageelementen 37 in einer vierten Ausführung, wieder in Ansicht schräg von oben. Anders als in den Beispielen nach den Figuren 15 bis 17 sind bei dem Beispiel nach Figur 18 die Anlageelemente 37 als ein Kranz von in Umfangsrichtung des Andrückrings 34 verlaufenden, kurzen, zueinander jeweils beabstandeten Rippen oder Stegen ausgeführt.

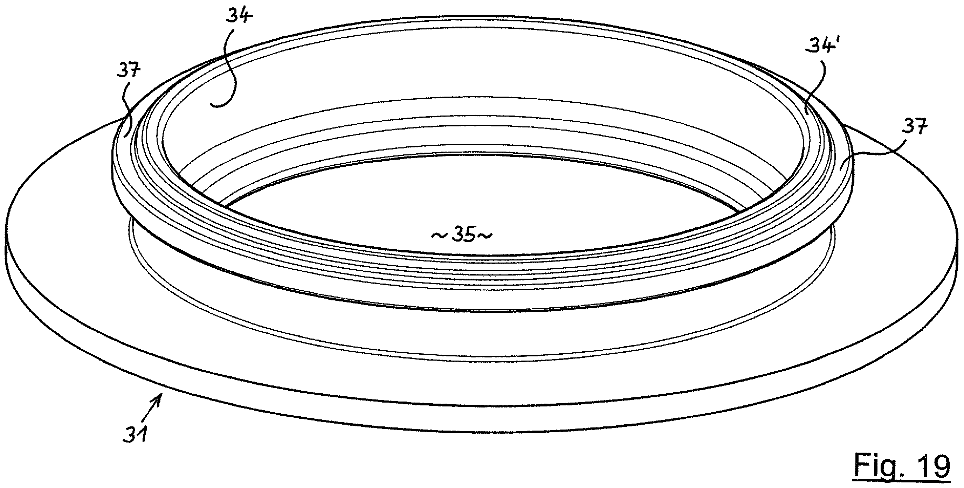

Figur 19 zeigt eine fünfte ventilseitige Endscheibe 31 des Filtereinsatzes, mit einem Andrückring 34 und mit einem Anlageelement 37 in einer fünften Ausführung, in Ansicht schräg von oben. Bei diesem Beispiel der Endscheibe 31 ist ein einzelnes Anlageelement 37 in Form einer durchgehenden, umlaufenden Rippe am Außenumfang des Andrückrings 34 nahe dessen freier Stirnseite 34' angeformt.

Mit Ausnahme der Anlageelemente 37 stimmen die in den Figuren 15 bis 19 dargestellten Ausführungsbeispiele der Endscheibe 31 überein, so dass diesbezüglich die Beschreibung des Beispiels nach Figur 15, auf welche verwiesen wird, auch für die Beispiele nach den Figuren 16 bis 19 zutrifft.

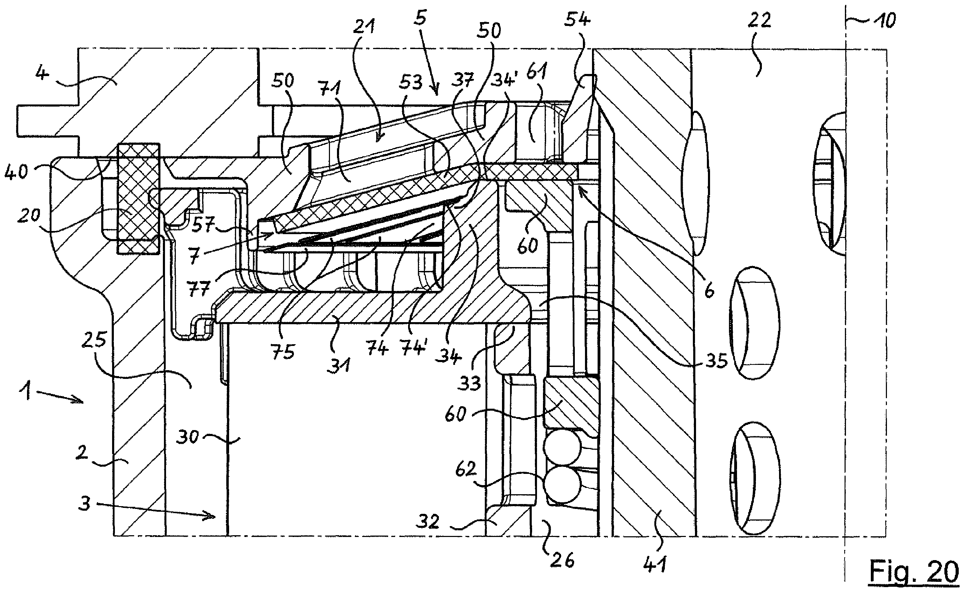

Figur 20 zeigt eine fünfte Ventileinheit 5, bei der gegenüber Figur 9 die Ventilplatte 50 und die Federscheibe 74 der Ventileinheit 5 geändert sind, mit dem Filterumgehungsventil 6 und dem Rücklaufsperrventil 7 in Schließstellung, in einem vergrößerten Teil-Längsschnitt.

Eine erste Änderung gegenüber dem Beispiel nach der Figur 9 besteht darin, dass bei dem Beispiel nach Figur 20 die Ventilplatte 50 an ihrem dem radial äußeren Ende von Ventilmembran 53 und Federscheibe 74 benachbarten Randbereich einen in Richtung zur Ventilmembran 53 und zur Federscheibe 74 vorragenden Schutzkragen 57 aufweist, dessen Höhe in axialer Richtung mindestens so groß wie, vorzugsweise größer als, die addierten Höhen von Ventilmembran 53 und Federscheibe 74 in axialer Richtung ist. Durch diesen Schutzkragen 57 werden die gegen mechanische Einwirkung empfindliche Ventilmembran 53 und Federscheibe 74 geschützt, was einer hohen Betriebssicherheit und Langlebigkeit der Ventileinheit 5 zugutekommt.

Eine zweite Änderung gegenüber dem Beispiel nach Figur 9 besteht darin, dass bei dem Beispiel nach Figur 20 die Federscheibe 74 radial außerhalb ihrer Federzungen 75 einen einstückig mit der übrigen Federscheibe 74 oder mit der übrigen Federscheibe 74 verbundenen Schutzring 77 aufweist. Dieser Schutzring 77 schützt die empfindlichen Federzungen 75 der Federscheibe 74 gegen schädliche mechanische Einwirkungen von außen.

In seinen übrigen Teilen und Funktionen entspricht das Beispiel des Fluidfilters 1 nach Figur 20 dem Beispiel nach Figur 9, auf dessen Beschreibung verwiesen wird.

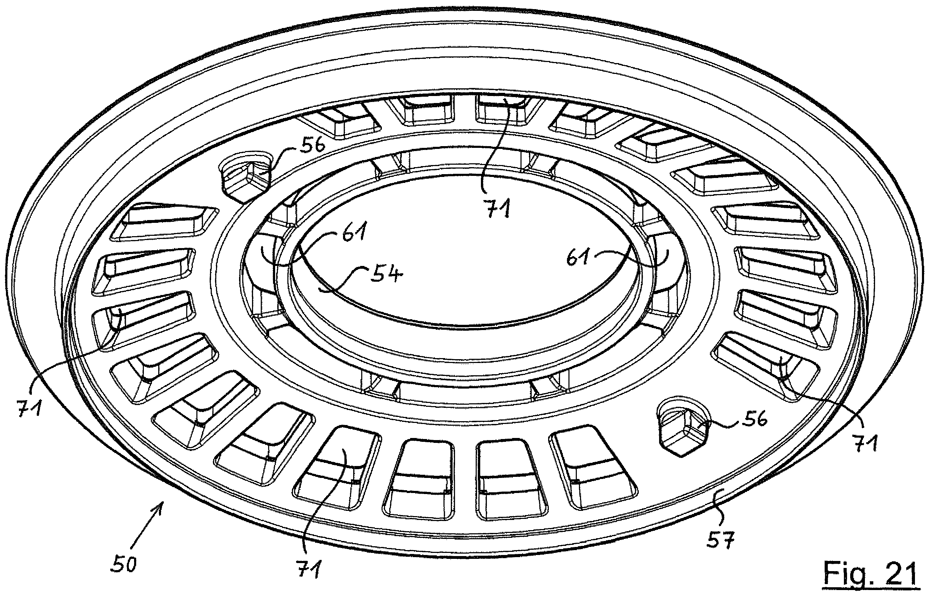

Figur 21 zeigt eine Ventilplatte 50 der Ventileinheit 5 als Einzelteil in einer Ansicht schräg von unten. Hierbei wird die kreisringscheibenförmige Grundform der Ventilplatte 50 erkennbar. Radial innen besitzt die Ventilplatte 50 die umlaufende, die zentrale Öffnung umgebende Dichtlippe 54. Radial außen davon liegende in Umfangsrichtung verteilt die Ventilöffnungen 61 des Filterumgehungsventils. Radial weiter nach außen schließt sich ein durchbrechungsfreier Bereich der Ventilplatte 50 an, in welchem im zusammengebauten Zustand die Ventilmembran mittels des Andrückrings des Filtereinsatzes an die Ventilplatte 50 angedrückt wird.

Noch weiter radial nach außen folgen dann die in Umfangsrichtung verteilt angeordneten Ventilöffnungen 71 des Rücklaufsperrventils. In zwei einander diametral gegenüberliegende in Bereichen weisen je zwei benachbarte Ventilöffnungen 71 einen vergrößerten Abstand auf. In diesen Bereichen ist jeweils ein aus der Fläche der Ventilplatte 50 vorragender Haltestift 56 angeformt, der zur Halterung einer Federscheibe der Ventileinheit dient.

Radial außen von den Ventilöffnungen 71 ist der umlaufende Schutzkragen 57 angeordnet. Radial ganz außen besitzt die Ventilplatte 50 einen flachen Rand, mit dem die Ventilplatte 50 an den Anschlussflansch anlegbar ist, wie weiter oben erläutert.

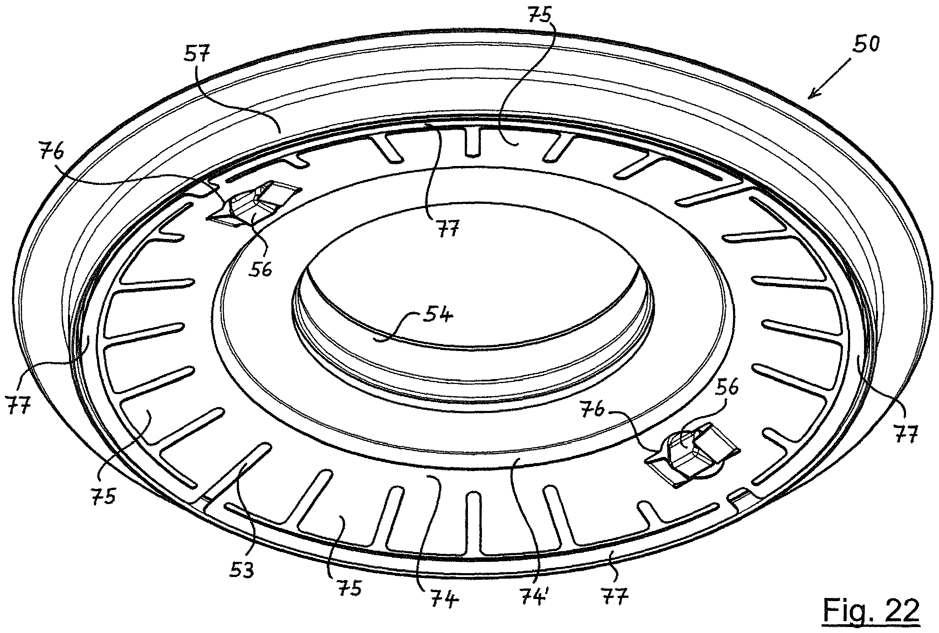

Figur 22 zeigt die Ventilplatte 50 aus Figur 21 mit daran angebrachter Federscheibe 74, in einer Ansicht schräg von unten. Die Federscheibe 74 besitzt lagegerecht zu den Haltestiften 56 angeordnete Haltelöcher 76, mit denen die Federscheibe 74 auf die Haltestifte 56 aufgepresst ist. Hiermit wird die Federscheibe 74 schon unverlierbar an der Ventilplatte 50 gehalten. Radial innen besitzt die Federscheibe 74 einen Randbereich 74', der zum Zusammenwirken mit den Anlageelementen am Andrückring des Filtereinsatzes dient. In Umfangsrichtung der Federscheibe 74 verteilt sind die radial nach außen weisenden Federzungen 75 angeordnet. Radial außen vom freien Ende der Federzungen 75 verläuft der Schutzring 77, der mit der übrigen Federscheibe 74 einstückig ausgeführt ist. Im Beispiel nach Figur 22 ist der Schutzring 77 in Umfangsrichtung in mehrere, hier vier, Abschnitte unterteilt, die jeweils an ihren Enden über Materialstege oder -brücken mit der übrigen Federscheibe 74 einstückig verbunden sind.

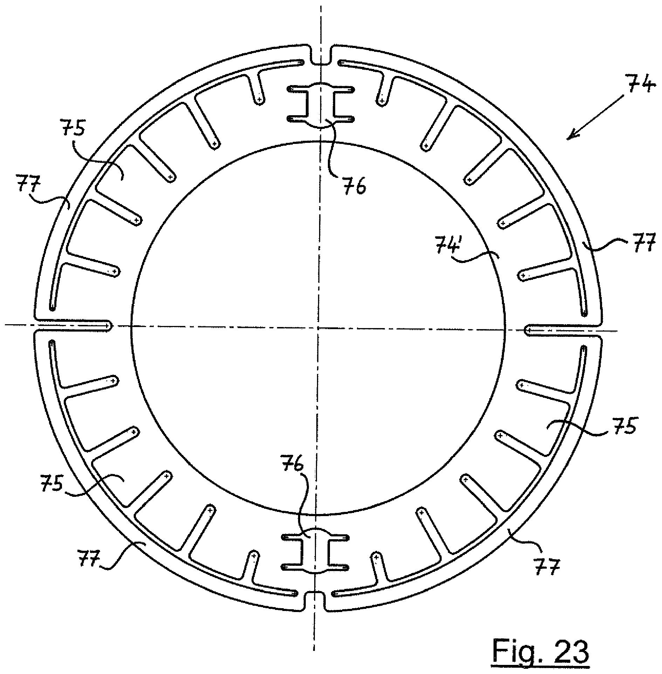

Figur 23 zeigt die Federscheibe 74 aus Figur 22 in Draufsicht. Radial innen liegt der Bereich 74' zum Vorspannen und/oder Andrücken der Federscheibe 74. Radial nach außen weisend sind in Umfangsrichtung verteilt die Federzungen 75 angeordnet. Oben und unten in Figur 23 ist jeweils eines der Haltelöcher 76 zum Verbinden der Federscheibe 74 mit den Haltestiften der Ventilplatte sichtbar. Radial ganz außen verläuft der Schutzring 77 mit seinen vier jeweils mit der übrigen Federscheibe 74 einstückig verbundenen Abschnitten. Diese Ausführung der Federscheibe 74 hat den spezifischen Vorteil, dass der Schutzring 77 besonders flexibel ist, weil er geschlitzt ist, und sich im Betrieb zusammen mit den Federzungen 75 anheben kann.

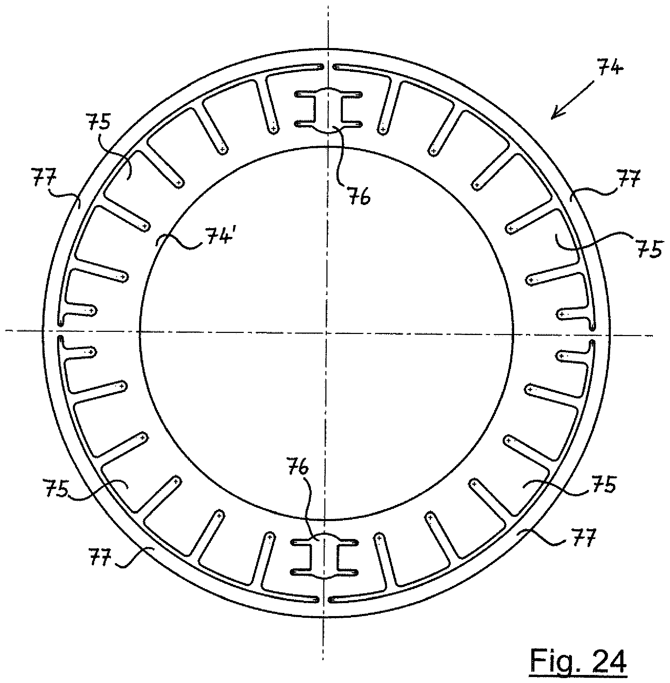

Figur 24 schließlich zeigt die Federscheibe 74 in einer gegenüber Figur 23 geänderten Ausführung, ebenfalls Draufsicht. Unterschiedlich zu dem Beispiel nach Figur 23 ist hier, dass der Schutzring 77 als durchgehend umlaufender, einteiliger Ring ausgeführt ist, der an vier in Umfangsrichtung gleichmäßig verteilten Stellen über jeweils eine Materialbrücke mit der übrigen Federscheibe 74 einstückig verbunden ist. Diese Ausführung der Federscheibe 74 hat den Vorteil, dass sie radial außen besonders gut gegen Beschädigungen geschützt ist, weil der Schutzring 77 umlaufend geschlossen ist.

**Bezugszeichenliste:**

| Zeichen | Bezeichnung |
|---|---|
| 1 | Fluidfilter |
| 10 | Längsmittelachse von 1 |
| | |
| 2 | Gehäuse |
| 20 | Dichtung |
| 21 | Fluidzulauf |
| 22 | Fluidablauf |
| 24 | Verschraubung von 2 mit 41 |
| 25 | Rohseite |
| 26 | Reinseite |
| | |
| 3 | Filtereinsatz |
| 30 | Filterstoffkörper |
| 31, 31' | Endscheiben (oben, unten) |
| 32 | Stützkörper in 30 |
| 32' | Stütznasen an 32 |
| 33, 33' | Enden von 32 (oben, unten) |
| 34 | Andrückring an 3 für 53 |
| 34' | Stirnseite von 34 |
| 35 | zentrale Öffnung in 31 |
| 37 | Anlageelement(e) für 74 an 34 |
| | |
| 4 | Anschlussflansch |
| 40 | Dichtfläche |
| 41 | zentraler Rohrstutzen |
| 42 | Verschraubung von 41 in 43 |
| 43 | zentraler Gewindestutzen in 4 |
| 46 | Federstütze für 62 an 41 |
| | |
| 5 | Ventileinheit |
| 50 | Ventilplatte |
| 53 | Ventilmembran |
| 53.1 | radial äußerer Bereich von 53 |
| 53.2 | radial innerer Bereich von 53 |
| 53.3 | radialer Zwischenbereich von 53 |
| 54 | Dichtlippe an 50 |
| 56 | Haltestifte an 50 |
| 57 | Schutzkragen an 50 |
| | |
| 6 | Filterumgehungsventil |
| 60 | Ventilkörper von 6 |
| 61 | Ventilöffnungen für 6 in 50 |
| 62 | Ventilfeder von 6 |
| | |
| 7 | Rücklaufsperrventil |
| 71 | Ventilöffnungen für 7 in 50 |
| 74 | Federscheibe |
| 74' | radial innerer Bereich von 74 |
| 75 | Federzungen an 74 |
| 76 | Haltelöcher in 74 |
| 77 | Schutzring an 74 |

## Patentansprüche

1. Fluidfilter (1) mit einem Gehäuse (2), mit einem in eine Rohseite (25) des Fluidfilters (1) mündenden Fluidzulauf (21) und einem von einer Reinseite (26) des Fluidfilters (1) abgehenden Fluidablauf (22), mit einem auswechselbaren, die Rohseite (25) und Reinseite (26) voneinander trennenden, hohlzylindrischen Filtereinsatz (3) und mit einer Ventileinheit (5), wobei die Ventileinheit (5) eine konzentrisch im Gehäuse (2) angeordnete, eine kreisringscheibenförmige Grundform aufweisende Ventilplatte (50) mit Ventilöffnungen (61, 71) und eine auf der Ventilplatte (50) angeordnete kreisringscheibenförmige flexible Ventilmembran (53) aufweist, wobei der Filtereinsatz (3) an seiner im Einbauzustand der Ventileinheit (5) zugewandten Stirnseite einen axial vorragenden Andrückring (34) in Form eines umlaufenden ringförmigen Kragens aufweist, wobei bei in das Gehäuse (2) eingebautem Filtereinsatz (3) dieser mit einer Stirnseite (34') des Andrückrings (34) die Ventilmembran (53) axial an die Ventilplatte (50) andrückt, wobei dabei die Ventilmembran (53) mit ihrem von dem Andrückring (34) an die Ventilplatte (50) angedrückten Membranbereich eine die Rohseite (25) und Reinseite (26) des Fluidfilters (1) voneinander trennende Dichtung bildet, wobei die Ventileinheit (5) ein Rücklaufsperrventil (7) ist und wobei bei in das Gehäuse (2) eingebautem Filtereinsatz (3) dieser mit dem Andrückring (34) die Ventilmembran (53) in einem radial inneren Membranbereich (53.2) an die Ventilplatte (50) andrückt,
**dadurch gekennzeichnet,**
**dass** auf der von der Ventilplatte (50) abgewandten Seite der Ventilmembran (53) eine Federscheibe (74) mit in Radialrichtung nach außen weisenden Federzungen (75) angeordnet ist und dass bei in das Gehäuse (2) eingebautem Filtereinsatz (3) dieser mit dem Andrückring (34) die Federscheibe (74) in Richtung zur Ventilmembran (53) vorspannt und/oder andrückt.

2. Fluidfilter nach Anspruch 1, **dadurch gekennzeichnet, dass** der Andrückring (34) mit einer im Einbauzustand des Filtereinsatzes (3) der Ventileinheit (5) zugewandten Endscheibe (31) des Filtereinsatzes (3) verbunden oder einstückig ausgeführt ist.

3. Fluidfilter nach Anspruch 1 oder 2, **dadurch gekennzeichnet, dass** der Fluidfilter (1) einen zentralen Rohrstutzen (41) aufweist und dass die Ventilplatte (50) dichtend auf dem Außenumfang des Rohrstutzens (41) sitzt.

4. Fluidfilter nach einem der Ansprüche 1 bis 3, **dadurch gekennzeichnet, dass** die Ventileinheit (5) ein Filterumgehungsventil (6) umfasst und dass bei in das Gehäuse (2) eingebautem Filtereinsatz (3) dieser mit dem Andrückring (34) die Ventilmembran (53) in einem radial äußeren Membranbereich (53.1) an die Ventilplatte (50) andrückt.

5. Fluidfilter nach Anspruch 3 und 4, **dadurch gekennzeichnet, dass** der Andrückring (34) mit seinem Innenumfang eine radiale Zentrierung und Führung für einen auf dem Rohrstutzen (41) axial verschieblichen, in Ventilschließrichtung mit einer Kraft vorbelasteten Ventilkörper (60) des Filterumgehungsventils (6) bildet.

6. Fluidfilter nach Anspruch 5, **dadurch gekennzeichnet, dass** der Ventilkörper (60) durch einen in seiner Grundform hohlzylindrischen Hülsenkörper oder durch einen im Querschnitt rechteckigen Ringkörper gebildet ist.

7. Fluidfilter nach einem der Ansprüche 1 bis 6, **dadurch gekennzeichnet, dass** der Andrückring (34) auf seiner Außenumfangsfläche wenigstens ein radial vorragendes, relativ zur Stirnseite (34') des Andrückrings (34) axial zurückliegendes, die Federscheibe (74) in Richtung zur Ventilmembran (53) vorspannendes und/ oder andrückendes Anlageelement (37) aufweist, wobei insbesondere ein Anlageelement (37) in Form eines in Umfangsrichtung umlaufenden Steges vorgesehen ist oder mehrere in Umfangsrichtung voneinander beabstandete Anlageelemente (37) in Form von Nocken oder von in Axial- oder Umfangsrichtung verlaufenden Rippen oder Stegen vorgesehen sind.

8. Fluidfilter nach einem der Ansprüche 1 bis 7, **dadurch gekennzeichnet, dass** die Federscheibe (74) unter Zwischenlage der Ventilmembran (53) punktuell mit der Ventilplatte (50) verbunden ist.

9. Fluidfilter nach Anspruch 8, **dadurch gekennzeichnet, dass** von der Ventilplatte (50) zwei oder mehr Haltestifte (56) in Richtung zur Federscheibe (74) abragen und dass die Federscheibe (74) zwei oder mehr lagegerecht zu den Haltestiften (56) angeordnete Haltelöcher (76) aufweist, in welche die Haltestifte (56) eingreifen.

10. Fluidfilter nach Anspruch 9, **dadurch gekennzeichnet, dass** die Federscheibe (74) mit ihren Haltelöchern (76) auf die Haltestifte (56) aufgepresst oder aufgeklemmt ist.

11. Fluidfilter nach einem der Ansprüche 1 bis 10, **dadurch gekennzeichnet, dass** die Federscheibe (74) einen einstückig mit ihr ausgebildeten, die Federzungen (75) radial außen umgebenden Schutzring (77) aufweist und/oder dass an der Ventilplatte (50) ein die Federzungen (75) der Federscheibe (74) radial außen umgebenden Schutzkragen (57) angeordnet ist.

12. Fluidfilter nach einem der Ansprüche 4 bis 11, **dadurch gekennzeichnet, dass** die Ventilplatte (50) und die flexible Ventilmembran (53) jeweils sowohl ein Teil des Filterumgehungsventils (6) als auch ein Teil des Rücklaufsperrventils (7) sind und dass bei in das Gehäuse (2) eingebautem Filtereinsatz (3) dieser mit dem daran angeordneten Andrückring (34) die Ventilmembran (53) in einem radialen Membranzwischenbereich (53.3) an die Ventilplatte (50) andrückt.

13. Fluidfilter nach einem der Ansprüche 1 bis 12, **dadurch gekennzeichnet, dass** zwischen dem Gehäuse (2) und dem Filtereinsatz (3) ein axial federndes Bauteil angeordnet ist, das auf den Filtereinsatz (3) in dessen Einbauzustand eine in Richtung zur Ventilplatte (50) wirkende Kraft ausübt.

14. Fluidfilter nach Anspruch 13, **dadurch gekennzeichnet, dass** das axial federnde Bauteil ein gitterförmiger, im Inneren des Filtereinsatzes (3) angeordneter Stützkörper (32) ist, der im Einbauzustand des Filtereinsatzes (3) mit seinem einen Ende (33) am Gehäuse (2) und mit seinem anderen Ende (33') am Filtereinsatz (3) abgestützt ist.

## Claims

1. Fluid filter (1) comprising a housing (2), a fluid inlet (21) opening into a raw side (25) of the fluid filter (1) and a fluid outlet (22) discharging from a pure side (26) of the fluid filter (1), with a replaceable hollow-cylindrical filter insert (3) separating the raw side (25) from the pure side (26), and with a valve unit (5) with a valve plate (50) arranged concentrically in the housing (2) and having the basic shape of an annular disc, with valve openings (61, 71) and a flexible, annular-disc-shaped valve membrane (53) arranged on the valve plate (50), wherein on its end that faces the valve unit (5) when in the mounted state the filter insert (3) has an axially protruding pressure ring (34) in the form of a circumferential annular collar, wherein the filter insert (3) when installed in the housing (2) presses the valve membrane (53) axially against the valve plate (50) with an end face (34') of the pressure ring (34), whereby the area of the valve membrane (53) that is pressed against the valve plate (50) by the pressure ring (34) forms a seal separating the raw side (25) from the pure side (26) of the fluid filter (1), wherein the valve unit (5) is a check valve (7) and wherein the filter insert (3) when installed in the housing (2) presses the valve membrane (53) with the pressure ring (34) against the valve plate (50) in a radially inner membrane area (53.2), **characterised in that**
a spring disc (74) with radially outwardly oriented spring tabs (75) is arranged on the side of the valve membrane (53) facing away from the valve plate (50), and that the filter insert (3) when installed in the housing (2) pre-stresses and/or presses the spring disc (74) with the pressure ring (34) in a direction to the valve membrane (53).

2. The fluid filter according to Claim 1, **characterised in that** the pressure ring (34) is connected to or integral with an end disc (31) of the filter insert (3), which end disc faces the valve unit (5) when the filter insert (3) is in its installed state.

3. The fluid filter according to Claim 1 or 2, **characterised in that** the fluid filter (1) has a central pipe fitting (41) and that the valve plate (50) is seated sealingly on the outer periphery of the pipe fitting (41).

4. The fluid filter according to one of Claims 1 to 3, **characterised in that** the valve unit (5) includes a filter bypass valve (6) and that the filter insert (3) when installed in the housing (2) presses the valve membrane (53) with the pressure ring (34) against the valve plate (50) in a radially outer membrane area (53.1).

5. The fluid filter according to Claims 3 and 4, **characterised in that** the inner circumference of the pressure ring (34) forms a radial centering and guide means for a valve body (60) of the filter bypass valve (6), the valve body being axially displaceable on the pipe fitting (41) and pre-stressed by a force exerted in the direction of valve closure.

6. The fluid filter according to Claim 5, **characterised in that** the valve body (60) is formed by an essentially hollow-cylindrical sleeve body or by an annular body with a rectangular cross-section.

7. The fluid filter according to one of Claims 1 to 6, **characterised in that** the pressure ring (34) comprises on its outer peripheral surface at least one radially protruding abutting element (37) that is set back relative to the end face (34') of the pressure ring (34) and that pre-stresses and/or presses the spring disc (74) toward the valve membrane (53), wherein an abutting element (37) particularly in the form of a peripherally extending land, or several abutting elements (37) peripherally spaced apart are provided in the shape of cams or axially or peripherally extending ribs or lands.

8. The fluid filter according to one of Claims 1 to 7, **characterised in that** the spring disc (74) is connected point by point to the valve plate (50), with the valve membrane (53) sandwiched in between.

9. The fluid filter according to Claim 8, **characterised in that** two or more holding pins (56) project away from the valve plate (50) towards the spring disc (74) and that the spring disc (74) has two or more retaining holes (76) aligned with the holding pins (56) for engagement therewith.

10. The fluid filter according to Claim 9, **characterised in that** the spring disc (74) is pressed or clamped with its retaining holes (76) onto the holding pins (56).

11. The fluid filter according to one of Claims 1 to 10, **characterised in that** the spring disc (74) has a protective ring (77) integral with the spring disc and radially outwardly surrounding the spring tabs (75), and/or that a protective collar (57) radially outwardly surrounding the spring tabs (75) of the spring disc (74) is arranged on the valve plate (50).

12. The fluid filter according to one of Claims 4 to 11, **characterised in that** the valve plate (50) and the flexible valve membrane (53) each are a part of both the filter bypass valve (6) and the check valve (7), and that the filter insert (3) when installed in the housing (2) presses the valve membrane (53) with the pressure ring (34) against the valve plate (50) in a radially intermediate membrane area (53.3).

13. The fluid filter according to one of Claims 1 to 12, **characterised in that** an axially resilient component is arranged between the housing (2) and the filter insert (3), with said component exerting a force on the filter insert (3) in a direction to the valve plate (50) with the filter insert in its installed state.

14. The fluid filter according to Claim 13, **characterised in that** the axially resilient component is a grid-shaped support body (32) arranged in the interior of the filter insert (3) and braced by one end (33) against the housing (2) and by the other end (33') against the filter insert (3) in its installed state.

## Revendications

1. Filtre à fluide (1) avec boîtier (2), doté d'une admission de fluide (21) débouchant sur une face brute (25) du filtre à fluide (1) et doté d'une évacuation de fluide (22) partant d'une face pure (26) du filtre à fluide (1), doté d'une cartouche de filtrage (3) interchangeable de forme cylindrique creuse, séparant l'une de l'autre la face brute (25) et la face pure (26), et doté d'un ensemble soupape (5), ledit ensemble soupape (5) présentant une plaque de soupape (50) à ouvertures de soupape (61, 71), agencée de manière concentrique dans le boîtier (2) et ayant une forme de base de disque circulaire, et une membrane de soupape (53) souple, en forme de disque circulaire, agencée sur ladite plaque de soupape (50), ladite cartouche de filtrage (3) présentant sur sa face frontale tournée vers l'ensemble soupape (5) à l'état monté, un anneau de pression (34) en saillie axiale sous forme de revers annulaire périphérique, lorsque la cartouche de filtrage (3) est montée dans le boîtier (2), celle-ci appuyant de manière axiale, avec une face frontale (34') de l'anneau de pression (34), la membrane de soupape (53) à la plaque de soupape (50), la membre de soupape (53) formant alors, avec sa zone appuyée à la plaque de soupape (50) par l'anneau de pression (34), un joint d'étanchéité séparant l'une de l'autre la face brute (25) et la face pure (26) du filtre à fluide (1), l'ensemble soupape (5) étant un clapet anti-retour (7) et lorsque la cartouche de filtrage (3) est montée dans le boîtier (2), celle-ci appuyant la membrane de soupape (53) à la plaque de soupape (50), avec l'anneau de pression (34) dans une zone de soupape radiale intérieure (53.2), **caractérisé en ce**
**qu'**une rondelle élastique (74) à languettes élastiques (75) dirigées dans le sens radial vers l'extérieur est agencée sur la face de la membrane de soupape (53) du côté opposé à la plaque de soupape (50), et que lorsque la cartouche de filtrage (3) est montée dans le boîtier (2), celle-ci sollicite, avec l'anneau de pression (34), la rondelle élastique (74) et/ou appuie dessus en direction de la membrane de soupape (53).

2. Filtre à fluide selon la revendication 1, **caractérisé en ce que** l'anneau de pression (34) est solidarisé à, ou réalisé d'un seul tenant avec un disque d'extrémité (31) de la cartouche de filtrage (3) qui est tourné vers l'ensemble soupape (5) lorsque la cartouche de filtrage (3) est à l'état monté.

3. Filtre à fluide selon la revendication 1 ou 2, **caractérisé en ce que** le filtre à fluide (1) présente un embout de tube central (41) et que la plaque de soupape (50) repose de manière hermétisante sur la périphérie extérieure de l'embout de tube (41).

4. Filtre à fluide selon l'une quelconque des revendications 1 à 3, **caractérisé en ce que** l'ensemble soupape (5) comprend une soupape de contournement (6) et que lorsque la cartouche de filtrage (3) est montée dans le boîtier (2), celle-ci appuie avec l'anneau de pression (34) la membrane de soupape (53) à la plaque de soupape (50) dans une zone de membrane radiale extérieure (53.1).

5. Filtre à fluide selon la revendication 3 et 4, **caractérisé en ce que** l'anneau de pression (34) constitue, avec sa périphérie intérieure, un centrage et guidage radiaux d'un corps de soupape (60) de la soupape de contournement (6) sur lequel est appliquée au préalable une force dans le sens de fermeture de la soupape et qui est déplaçable axialement sur l'embout de tube (41).

6. Filtre à fluide selon la revendication 5, **caractérisé en ce que** le corps de soupape (60) est constitué par un corps de douille de forme de base cylindrique creuse, ou par un corps d'anneau de section droite rectangulaire.

7. Filtre à fluide selon l'une quelconque des revendications 1 à 6, **caractérisé en ce que** l'anneau de pression (34) présente sur sa face de périphérie extérieure au moins un élément d'installation (37) en saillie radiale, en retrait axial par rapport à la face frontale (34') de l'anneau de pression (34), et sollicitant et/ou appuyant sur la rondelle élastique (74) en direction de la membrane de soupape (53), notamment un élément d'installation (37) étant prévu sous forme d'une rainure périphérique dans le sens de la circonférence, ou plusieurs éléments d'installation (37) espacés les uns des autres dans le sens de la circonférence étant prévus sous forme de bossages ou de nervures ou rainures s'étendant dans le sens axial ou de la circonférence.

8. Filtre à fluide selon l'une quelconque des revendications 1 à 7, **caractérisé en ce que** la rondelle élastique (74) est reliée de manière ponctuelle à la plaque de soupape (50) sous couche intermédiaire de la membrane de soupape (53).

9. Filtre à fluide selon la revendication 8, **caractérisé en ce que** deux ou plusieurs broches de retenue (56) saillent de la plaque de soupape (50) en direction de la rondelle élastique (74), et que la rondelle élastique (74) présente deux ou plusieurs trous de retenue (76), agencés de manière exacte par rapport aux broches de retenue (56) et dans lesquels les broches de retenue (56) ont prise.

10. Filtre à fluide selon la revendication 9, **caractérisé en ce que** la rondelle élastique (74) est pressée ou serrée avec ses trous de retenue (76) sur les broches de retenue (56).

11. Filtre à fluide selon l'une quelconque des revendications 1 à 10, **caractérisé en ce que** la rondelle élastique (74) présente un anneau de protection (77) réalisé d'un seul tenant avec elle et entourant radialement à l'extérieur les languettes élastiques (75), et/ou qu'un revers de protection (57) entourant radialement à l'extérieur les languettes élastiques (75) de la rondelle élastique (74) est agencé sur la plaque de soupape (50).

12. Filtre à fluide selon l'une quelconque des revendications 4 à 11, **caractérisé en ce que** la plaque de soupape (50) et la membrane de soupape souple (53) sont chacune aussi bien une partie de la soupape de contournement (6) qu'une partie du clapet anti-retour (7) et que lorsque la cartouche de filtrage (3) est montée dans le boîtier (2), celle-ci appuie avec l'anneau de pression (34) agencé dessus la membrane de soupape (53) à la plaque de soupape (50) dans une zone intermédiaire de membrane radiale (53.3).

13. Filtre à fluide selon l'une quelconque des revendications 1 à 12, **caractérisé en ce qu'**une pièce élastique dans le sens axial est agencée entre le boîtier (2) et la cartouche de filtrage (3), laquelle pièce élastique applique sur la cartouche de filtrage (3) dans son état monté une force qui s'exerce en direction de la plaque de soupape (50).

14. Filtre à fluide selon la revendication 13, **caractérisé en ce que** la pièce élastique dans le sens axial est un corps d'appui (32) en forme de grille, agencé à l'intérieur de la cartouche de filtrage (3), lequel corps d'appui est, lorsque la cartouche de filtrage (3) est montée, soutenu par son extrémité (33) sur le boîtier (2) et par son autre extrémité (33') sur la cartouche de filtrage (3).
